# EUROPÄISCHE PATENTSCHRIFT

(11) **EP 4 554 439 B1**
(45) Veröffentlichungstag und Bekanntmachung des Hinweises auf die Patenterteilung: **22.10.2025**
(21) Anmeldenummer: 23732451.2
(22) Anmeldetag: 08.06.2023
(51) Int. Cl.: A47K 3/28, F16B 47/00

(54) **HALTESYSTEM ZUR MONTAGE AN EINER INSBESONDERE VERTIKALEN WAND UND VERFAHREN ZUR MONTAGE DES HALTESYSTEMS**
HOLDING SYSTEM FOR MOUNTING ON A WALL, IN PARTICULAR VERTICAL WALL, AND METHOD FOR MOUNTING THE HOLDING SYSTEM
SYSTÈME DE SUPPORT DESTINÉ À ÊTRE MONTÉ SUR UNE PAROI, EN PARTICULIER UNE PAROI VERTICALE, ET PROCÉDÉ DE MONTAGE DU SYSTÈME DE SUPPORT

(30) Priorität: 13.07.2022 DE 102022117426
(43) Veröffentlichungstag der Anmeldung: 21.05.2025
(73) Patentinhaber: TESA SE, 22848 Norderstedt (DE)
(72) Erfinder: FASTERMANN, Franz, 22848 Norderstedt (DE); ALTENWEGNER, Tanja, 22848 Norderstedt (DE); LIPS, Yvonne, 22848 Norderstedt (DE); MASSON, Martje, 22848 Norderstedt (DE)
(74) Vertreter: tesa SE
(86) Internationale Anmeldenummer: PCT/EP2023/065351
(87) Internationale Veröffentlichungsnummer: WO 2024/012775

(56) Entgegenhaltungen:
- EP-A2- 0 861 622
- WO-A1-2005/046938
- US-A- 3 998 417
- US-A1- 2008 053 931
- US-A1- 2010 155 565
- US-A1- 2013 056 598

## Beschreibung

Die Erfindung betrifft ein Haltesystem zur Montage an einer insbesondere vertikalen Wand, mit mindestens einem zum Halten eines Objekts ausgebildetem Objekthalter, der mittels einer doppelseitig klebenden Selbstklebeeinheit an der Wand festklebbar ist. Die Erfindung betrifft ferner ein Verfahren zur Montage eines solchen Haltesystems.

Derartige Haltesysteme finden überwiegend Verwendung zur Bereitstellung von Möglichkeiten, um Objekte unterschiedlichster Art an einer Wand anzubringen oder aufzuhängen, ohne die Wand oder gar das Objekt selbst durch Bohrungen, Schrauben und/oder Nägel zu beeinträchtigen.

### Stand der Technik

Ein Haltesystem und zugehöriges Montageverfahren der eingangs genannten Art sind aus der EP 0 861 622 A2 bekannt. Das dort als Haltevorrichtung bezeichnete Haltesystem hat eine Basisplatte, die mittels eines durch Zug entklebbaren Klebestreifens an eine Wand anklebbar ist. Ein zungenartiger Anfasser des Klebestreifens überragt die Basisplatte und erlaubt ein Ziehen an dem angeklebten Klebestreifen, um selbigen zu dehnen und zusammen mit der Basisplatte wieder rückstandslos von der Wand entfernen zu können. An der Basisplatte ist über ein Filmscharnier ein als Funktionsteil bezeichneter Objekthalter verschwenkbar angeordnet, der eine Haltevorrichtung aufweist und in eine Halteposition an die Basisplatte heranklappbar ist, in der die Haltevorrichtung zum Halten eines Objekts nutzbar ist. Eine gewisse Unzulänglichkeit bei der bekannten Haltevorrichtung besteht darin, dass es relativ schwierig ist, das Haltesystem so zu montieren, dass es in der nutzungsbereit montierten Gebrauchskonfiguration eine angestrebte Ausrichtung bezüglich der zugeordneten Wand aufweist.

Aus der WO 2005/046938 A1 ist eine Spannvorrichtung bekannt, die einen Grundkörper aufweist, der mittels zweier jeweils durch Zug entklebbarer Klebestreifen lösbar an einer Oberfläche festklebbar ist. In dem Grundkörper ist eine Gewindebohrung ausgebildet, die von einem Schraubelement durchsetzt ist, das einen Kopf aufweist, an dem ebenfalls ein durch Zug entklebbarer Klebestreifen angebracht ist. Es besteht die Möglichkeit, im an einer Oberfläche festgeklebten Zustand des Grundkörpers das Schraubelement so zu verlagern, dass der an seinem Kopf angebrachte Klebestreifen an der besagten Oberfläche haftet. Je nach Betätigungsrichtung des Schraubelementes können Zugkräfte oder Druckkräfte übertragen werden.

### Aufgabe

Eine Aufgabe der Erfindung besteht darin, ein einfach handhabbares selbstklebendes Haltesystem anzugeben, das sich mit geringem Aufwand in einer gewünschten Ausrichtung präzise an einer insbesondere vertikalen Wand montieren lässt, ohne die Wand durch Bohrungen, Schrauben oder Nägel zu beeinträchtigen. Ferner soll ein einfaches Verfahren zur Montage des Haltesystems vorgeschlagen werden.

### Lösung

Die vorgenannte Aufgabe wird durch die Erfindung mit den Merkmalen der unabhängigen Ansprüche gelöst. Vorteilhafte Weiterbildungen der Erfindung sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen. Die Beschreibung aller Merkmale und technischer Wirkungen, die mit Bezug auf das erfindungsgemäße Haltesystem erfolgen, gelten sinngemäß auch für das erfindungsgemäße Montageverfahren, ebenso auch umgekehrt.

Im Besonderen wird die Aufgabe bei einem die eingangs genannten Merkmale aufweisenden Haltesystem gelöst durch
- einen eine Vorderseite und eine Rückseite aufweisenden Montagerahmen, der von mindestens einem zu der Vorderseite und zu der Rückseite offenen Positionierfenster durchsetzt ist und der rückseitig eine Selbstklebeeinrichtung aufweist, mit der er in einer Wandposition an einer Wand festklebbar ist,
- mindestens eine doppelseitig klebende Selbstklebeeinheit, die eine rückseitige Klebefläche aufweist und die ausgebildet ist, um durch das mindestens eine Positionierfenster des die Wandposition einnehmenden Montagerahmens hindurch unter Einnahme einer Klebeposition mit seiner rückseitigen Klebefläche an die Wand angeklebt zu werden,
- und mindestens eine eine Vorderseite und eine Rückseite aufweisende Befestigungsplatte, die mit einer durch bezüglich des Montagerahmens erfolgenden Formschluss vorgegebenen Ausrichtung in ein Positionierfenster des Montagerahmens einsetzbar und unter Einnahme einer sich dadurch ergebenden Befestigungsposition mit ihrer Rückseite an die vorderseitige Klebefläche der in dem Positionierfenster in der Klebeposition befindlichen Selbstklebeeinheit anklebbar ist und die an ihrer Vorderseite eine zur Befestigung des Objekthalters ausgebildete Befestigungsstruktur aufweist,
- wobei der Objekthalter an seiner Rückseite eine an die Befestigungsstruktur der mindestens einen Basisplatte angepasste Kopplungseinrichtung aufweist und unter zumindest partieller vorderseitiger Abdeckung des Montagerahmens mit seiner Kopplungseinrichtung in einer Halteposition an der Befestigungsstruktur der mindestens einen in der Befestigungsposition befindlichen Befestigungsplatte befestigbar ist.

Die Aufgabe wird ferner insbesondere durch ein Verfahren zur Montage eines Haltesystems der vorgenannten Ausgestaltung gelöst, das sich durch folgende Verfahrensschritte auszeichnet:
- Festkleben des Montagerahmens mittels dessen rückseitiger Selbstklebeeinrichtung in der gewünschten Wandposition an der Wand,
- anschließendes Ankleben der mindestens einen doppelseitig klebenden Selbstklebeeinheit mit ihrer rückseitigen Klebefläche in ihrer Klebeposition an der Wand durch das mindestens eine Positionierfenster des in der Wandposition festgeklebten Montagerahmens hindurch,
- daran anschließendes formschlüssiges Einsetzen der mindestens einen Befestigungsplatte in ein Positionierfenster des in der Wandposition festgeklebten Montagerahmens, verbunden mit einem Ankleben der auf diese Weise bezüglich des Montagerahmens ausgerichteten Befestigungsplatte an die vorderseitige Klebefläche der in dem Positionierfenster in der Klebeposition befindlichen Selbstklebeeinheit zum Erhalt der Befestigungsposition, und
- anschließendes Befestigen des Objekthalters in der Halteposition an der Befestigungsstruktur der mindestens einen eine Befestigungsposition einnehmenden Befestigungsplatte mittels der Kopplungseinrichtung, wobei der Montagerahmen an seiner Vorderseite durch den Objekthalter zumindest partiell abgedeckt wird.

Wenn das Haltesystem gebrauchsfertig an einer Wand montiert ist, nimmt es eine nutzungsbereite Gebrauchskonfiguration ein, die sich insbesondere dadurch auszeichnet, dass der Montagerahmen die Wandposition, die mindestens eine doppelseitig klebende Selbstklebeeinheit die Klebeposition, die mindestens eine Befestigungsplatte die Befestigungsposition und der Objekthalter die Halteposition einnehmen. In dieser nutzungsbereiten Gebrauchskonfiguration sind die vorgenannten Komponenten unter Mitwirkung der damit bestückten insbesondere vertikalen Wand zu einer Baugruppe zusammengefügt, die sich als eine an der Wand montierte Einheit präsentiert und die zweckmäßigerweise einen demontierbaren Aufbau hat, so dass sie bei Bedarf jederzeit auch wieder von der Wand beschädigungsfrei abgenommen werden kann.

Das Haltesystem hat einen Montagerahmen, der bei der Montage des Haltesystems als erste Komponente an der mit dem Haltesystem auszustattenden Wand angebracht wird. Eine rückseitige Selbstklebeeinrichtung des Montagerahmens erlaubt ein werkzeugloses Fixieren des Montagerahmens in einer als Wandposition bezeichneten Position an der Wand. Die in der Wandposition vorhandene neigungsmäßige Ausrichtung des Montagerahmens bestimmt die Ausrichtung des gesamten montierten Haltesystems. Da der Montagerahmen gut zugänglich ist und leicht ausgerichtet werden kann, beispielsweise unter Zuhilfenahme einer geeigneten Nivellierungseinrichtung wie zum Beispiel einer Wasserwaage, können bereits durch das Anbringen des Montagerahmens optimale Voraussetzungen für eine in der nutzungsbereiten Gebrauchskonfiguration exakte Ausrichtung des Haltesystems geschaffen werden.

Hauptaufgabe des Montagerahmens ist eine Funktion nach Art einer Schablone zur Montage einer oder mehrerer Befestigungsplatten, an denen ein Objekthalter befestigt werden kann. Durch formschlüssiges Zusammenwirken mit dem Montagerahmen ist die mindestens eine Befestigungsplatte bezüglich des Montagerahmens exakt ausgerichtet, wenn sie in einer Befestigungsposition montiert ist. Die Befestigungsposition ergibt sich durch Verkleben mit der Wand mittels einer oder mehrerer doppelseitig klebender Selbstklebeeinheiten. Der Montagerahmen ist von einem oder mehreren Positionierfenstern durchsetzt, die in der Wandposition des Montagerahmens einen Durchgang zur Wand ermöglichen, wobei für jedes Positionierfenster eine doppelseitig klebende Selbstklebeeinheit vorhanden ist, so dass in jedem Positionierfenster eine Selbstklebeeinheit zur Einnahme einer Klebeposition an der Wand festklebbar ist.

Die mindestens eine Befestigungsplatte ist in das mindestens eine Positionierfenster einsetzbar, wobei ein dabei auftretender Formschluss eine vorbestimmte Ausrichtung zwischen der Befestigungsplatte und dem Montagerahmen und folglich auch zwischen der Befestigungsplatte und der Wand vorgibt und wobei durch das Zusammenwirken der Befestigungsplatte mit der im zugeordneten Positionierfenster befindlichen Selbstklebeeinheit eine als Befestigungsposition bezeichnete Position der Befestigungsplatte vorgegeben wird. Jede Befestigungsplatte ist also durch eine ihr zugeordnete Selbstklebeeinheit ohne Mitwirkung des Montagerahmens an die Wand angeklebt, wobei der Montagerahmen unabhängig von den Befestigungselementen durch seine Selbstklebeeinrichtung an der Wand fixiert ist und hauptsächlich eine Aufgabe als Montageschablone für die mindestens eine Befestigungsplatte erfüllt.

Unabhängig von der Anzahl der Befestigungsplatten hat jede Befestigungsplatte an ihrer von der zugeordneten Selbstklebeeinheit abgewandten Vorderseite eine Befestigungsstruktur, die auf eine Kopplungseinrichtung des Objekthalters funktionell so abgestimmt ist, dass der Objekthalter durch das mechanische Zusammenwirken zwischen der Kopplungseinrichtung und der Befestigungsstruktur jeder Befestigungsplatte an der mindestens einen Befestigungsplatte befestigbar ist. In der als Halteposition bezeichneten, bestimmungsgemäß montierten Position des Objekthalters ist der Montagerahmen an seiner Vorderseite zumindest partiell und bevorzugt zur Gänze durch den Objekthalter abgedeckt. Dadurch können sämtliche Befestigungsmaßnahmen zur Gewährleistung eines ansprechenden Erscheinungsbildes für den Betrachter verborgen werden. Der in der Halteposition montierte Objekthalter kann zum Halten eines oder mehrerer Objekte genutzt werden, wobei der Objekthalter eine standardmäßige Gestaltung oder eine an ein zu haltendes Objekt individuell angepasste Gestaltung haben kann.

Es ist insbesondere vorgesehen, dass der Objekthalter mindestens eine zum Halten eines Objekts vorgesehene Haltestruktur aufweist. Im Rahmen der Erfindung besteht die Möglichkeit, das Haltesystem mit mehreren Objekthaltern auszustatten, die sich in ihrer Haltestruktur voneinander unterscheiden, deren Kopplungseinrichtung jedoch eine einheitliche Gestaltung hat, so dass sie alternativ zueinander in der Halteposition an der mindestens einen Befestigungsstruktur anbringbar sind.

Vorteilhafte Weiterbildungen der Erfindung gehen aus den Unteransprüchen hervor.

Es ist vorteilhaft, wenn der Montagerahmen des Haltesystems eine zur Ausrichtung der Wandposition der Montageplatte nutzbare Nivellierungseinrichtung aufweist. Mit anderen Worten kann also der Montagerahmen über eine integrierte Nivellierungseinrichtung verfügen. Diese Nivellierungseinrichtung ist insbesondere als eine sogenannte Libelle ausgebildet, wie sie bei Wasserwaagen zum Einsatz kommt, so dass letztlich der Montagerahmen unmittelbar selbst die Funktion einer Wasserwaage übernehmen kann. Mit Hilfe der Nivellierungseinrichtung lässt sich der Montagerahmen insbesondere sehr exakt horizontal an einer Wand ausrichten, bevor er zur endgültigen Aktivierung seiner Selbstklebeeinrichtung an die Wand angedrückt wird. Die Nivellierungseinrichtung ist so angebracht, dass sie von der Vorderseite des Montagerahmens her sichtbar ist. Sie kann insbesondere im Bereich der Vorderseite des Montagerahmens angeordnet sein, so dass sie eine blickgünstige Position einnimmt.

Die Selbstklebeeinrichtung des Montagerahmens besteht zweckmäßigerweise aus wenigstens zwei selbstklebenden Klebestreifen, die jeweils mit einer flexiblen Schutzabdeckung versehen sind, die vor dem Ankleben an die Wand abgezogen werden kann. Bei der flexiblen Schutzabdeckung handelt es sich beispielsweise um ein Abdeckpapier. Die Klebestreifen sind in der Achsrichtung einer imaginären Rahmenhauptachse beabstandet zueinander insbesondere so angeordnet, dass sie eine zu der Rahmenhauptachse orthogonale Längsausrichtung haben. In der durch die Klebekraft der Selbstklebeeinrichtung fixierten Wandposition ist die Rahmenhauptachse des Montagerahmens zweckmäßigerweise horizontal ausgerichtet.

Die mindestens eine und somit jede zum Festkleben einer Befestigungsplatte vorhandene, doppelseitig klebende Selbstklebeeinheit verfügt zweckmäßigerweise über mindestens einen eine Längserstreckung aufweisenden doppelseitig selbstklebenden Klebestreifen.

Bevorzugt handelt es sich bei dem mindestens einen doppelseitig selbstklebenden Klebestreifen um einen durch Zug entklebbaren Klebestreifen, der einen Endabschnitt aufweist, der als eine zum Ziehen mit Fingern einer Hand ergreifbare Ziehzunge ausgebildet ist. Solche durch Zug entklebbare Klebestreifen sind als solches bekannt und beispielsweise in der EP 0 861 632 A2 oder in der WO 2005/046938 A1 beschrieben sowie in der DE 100 03 318 A1, der DE 102 52 088 A1, der DE 102 52 089 A1 und der DE 10 2007 021 504 A1.

Als günstig wird es angesehen, wenn die Ziehzunge jedes Klebestreifens einer jeden eine Klebeposition einnehmenden Selbstklebeeinheit von der in der Befestigungsposition an der vorderseitigen Klebefläche der Selbstklebeeinheit festgeklebten Befestigungsplatte nicht abgedeckt ist. Auf diese Weise kann die Ziehzunge zumindest bei nicht montiertem Objekthalter bequem ergriffen werden, wenn ein Ablösen des Haltesystems von der Wand gewünscht ist.

Um eine besonders hohe Haltekraft zu erzielen, ist es zweckmäßig, wenn jede doppelseitig klebende Selbstklebeeinheit über mehrere mit zueinander paralleler Längserstreckung nebeneinander angeordnete, doppelseitig selbstklebende Klebestreifen verfügt. Diese mehreren Klebestreifen bilden jeweils gemeinsam die rückseitige und die vorderseitige Klebefläche der Selbstklebeeinheit. Jeder Klebestreifen trägt also mit einem streifenförmigen Klebeflächenabschnitt zur Bildung der betreffenden Klebefläche bei. Die mehreren Klebestreifen sind zwischen zwei sich jeweils über sämtliche Klebestreifen der Selbstklebeeinheit hinweg erstreckenden flexiblen ersten und zweiten Schutzabdeckungen angeordnet, die zur Nutzung der zugeordneten Klebefläche abziehbar sind. Bei diesen flexiblen Schutzabdeckungen handelt es sich insbesondere jeweils um ein Abdeckpapier. Die erste Schutzabdeckung ist abziehbar, um die Selbstklebeeinheit unter gleichzeitiger Nutzung sämtlicher Klebestreifen der Selbstklebeeinheit mit der rückseitigen Klebefläche in der Klebeposition an einer Wand festzukleben.

Sobald eine Selbstklebeeinheit in der Klebeposition fixiert ist, kann bequem die zweite Schutzabdeckung abgezogen werden, um die vordere Klebefläche zum Festkleben einer Befestigungsplatte nutzbar zu machen.

Zweckmäßigerweise hat die mindestens eine und somit jede vorhandene Befestigungsplatte an ihrer Vorderseite in jedem Bereich, der in der Befestigungsposition einen der Klebestreifen überdeckt, eine sich entlang des überdeckten Klebestreifens erstreckende Andrückbahn, an der ein manuell handhabbares Andrückwerkzeug ansetzbar und entlangreibbar ist. Eine auf der Befestigungsplatte angebrachte Information kann den Nutzer anleiten, eine gewisse Anzahl von Anreibevorgängen vorzunehmen, um einen optimal sicheren Klebehalt zu gewährleisten. Die Andrückbahn kann beispielsweise durch eine längsnutartige Vertiefung definiert sein, die in der Vorderseite der Befestigungsplatte ausgebildet ist.

Das Haltesystem enthält zweckmäßigerweise ein unabhängig von den anderen Systemkomponenten manuell handhabbares Andrückwerkzeug, mit dessen Hilfe die mindestens eine Befestigungsplatte an die zu ihrer Klebefixierung vorgesehene Selbstklebeeinheit andrückbar ist. Um dieses Andrückwerkzeug verliersicher aufbewahren zu können, ist es zweckmäßig, wenn der Objekthalter rückseitig über eine Aufnahmevertiefung verfügt, in der das Andrückwerkzeug während seines Nichtgebrauches lösbar untergebracht werden kann.

Zur Erzielung der in der Befestigungsposition vorliegenden, auf einem Formschluss mit dem Montagerahmen basierenden Ausrichtung jeder Befestigungsplatte ist es zweckmäßig, wenn die durch den Montagerahmen definierte Umfangskontur des mindestens einen und somit jeden Positionierfensters und die randseitige Umfangskontur der mindestens einen zugeordneten Befestigungsplatte unkreisförmig und komplementär zueinander gestaltet sind. Die Umfangskonturen sind insbesondere so aufeinander abgestimmt, dass die Befestigungsplatte zur Anbringung in ihrer Befestigungsposition nur in einer einzigen bezüglich des Montagerahmens eingenommenen Relativposition in das mindestens eine Positionierfenster einsetzbar ist. Auf diese Weise kann sichergestellt werden, dass die an einer jeweiligen Befestigungsplatte angeordneten Befestigungsstrukturen die für die nachfolgende Anbringung des Objekthalters erforderliche Ausrichtung haben.

Die mindestens eine Befestigungsplatte verfügt randseitig zweckmäßigerweise über mindestens einen seitlich vorstehenden Abstützvorsprung, der in der Befestigungsposition den Montagerahmen im Bereich seiner Rückseite partiell überlappt und mit dem sich die Befestigungsplatte rückseitig an einem Abstützabschnitt des Montagerahmens abstützen kann oder abstützt.

Dadurch kann insbesondere gewährleistet werden, dass die betreffende Befestigungsplatte in der Befestigungsposition einen Mindestabstand zur benachbarten Wand nicht unterschreitet und die Befestigungsplatte am Montagerahmen ungeachtet der Flexibilität der zugeordneten Selbstklebeeinheit stabil abgestützt ist. Bevorzugt hat die Befestigungsplatte wenigstens an zwei sich gegenüberliegenden Randbereichen jeweils mindestens einen Abstützvorsprung. Jeder Abstützvorsprung kann beispielsweise laschenförmig ausgebildet sein.

Bevorzugt hat die Befestigungsstruktur der mindestens einen und somit einer jeden Befestigungsplatte mindestens einen Befestigungsschlitz, der über eine hinterschnittene Querschnittskontur verfügt und der sich in der Befestigungsposition der Befestigungsplatte zweckmäßigerweise vertikal erstreckt. Der Befestigungsschlitz ist zur Vorderseite der Befestigungsplatte hin offen und hat an einem Schlitzende eine Einführöffnung, durch die hindurch der Objekthalter bei seiner Montage mit einem Kopplungsvorsprung seiner Kopplungseinrichtung formschlüssig einschiebbar ist. Das Einfädeln in einen jeweiligen Befestigungsschlitz kann vorteilhaft erleichtert werden, indem der Montagerahmen im Umfangsbereich jedes Positionierfensters mit einer trichterartigen Einführstruktur versehen ist, die mit einem Befestigungsschlitz fluchtet, wenn sich die zugeordnete Befestigungsplatte in ihrer Befestigungsposition befindet. Bei in der Wandposition fixiertem Montagerahmen weisen die Einführöffnungen der trichterartigen Einführstrukturen zweckmäßigerweise vertikal nach oben.

Die rückseitig am Objekthalter angeordnete Kopplungseinrichtung ist insbesondere so ausgebildet, dass sie im Falle des Vorhandenseins mehrerer Befestigungsplatten mit den Befestigungsstrukturen sämtlicher Befestigungsplatten in Eingriff steht. Auf diese Weise erfährt auch ein über eine relativ große Baulänge verfügender Objekthalter eine hohe Haltekraft und ist in der Lage, selbst Objekte mit höherem Gewicht sicher an der Wand zu halten.

Die Anzahl der vorhandenen Positionierfenster kann bei der Herstellung des Haltesystems in Abhängigkeit von der Halteaufgabe und der aufzubringenden Haltekräfte variabel gewählt werden. Somit besteht die Möglichkeit, den Montagerahmen entweder mit nur einem einzigen Positionierfenster oder mit mehreren Positionierfenstern auszustatten. Die Anzahl der Selbstklebeeinheiten und der Befestigungsplatten entspricht insbesondere der Anzahl der jeweils vorhandenen Positionierfenster. Soweit mehrere Positionierfenster vorhanden sind, sind selbige zweckmäßigerweise entlang einer imaginären Rahmenhauptachse des Montagerahmens in einer Reihe mit Abstand nebeneinander angeordnet. Wenn der Montagerahmen in bevorzugter Formgebung eine Längsgestalt hat, entspricht die imaginäre Rahmenhauptachse der Längsachse des Montagerahmens. Die imaginäre Rahmenhauptachse ist in der montierten Wandposition des Montagerahmens vorzugsweise horizontal ausgerichtet.

Als besonders zweckmäßig wird es angesehen, wenn der Montagerahmen über ein oder zwei oder vier Positionierfenster verfügt.

Wie schon angeklungen ist, verfügt der Objekthalter zweckmäßigerweise über mindestens eine zum Halten eines Objekts vorgesehene Haltestruktur. Eine solche Haltestruktur kann beispielsweise als eine in der Halteposition sich in einer Horizontalebene erstreckende Ablageplatte ausgeführt sein, auf der sich ein oder mehrere Objekte ablegen lassen, beispielsweise Schmuckstücke oder Bilder. Eine besonders vorteilhafte Haltestruktur enthält mindestens eine Einhängevertiefung, die insbesondere rinnenförmig ausgebildet ist und die es ermöglicht, ein festzuhaltendes Objekt einzuhängen.

Vorzugsweise enthält das Haltesystem ein oder mehrere Objekte, die zur Fixierung durch die Haltestruktur ausgebildet sind, wobei mindestens ein Objekt eine Hakenstruktur aufweisen kann, mit der es in eine Einhängevertiefung des Objekthalters einhängbar ist. Ein solches Objekt kann beispielsweise kastenförmig oder becherförmig ausgebildet sein.

Jedes Positionierfenster kann beispielsweise eine zumindest im Wesentlichen rechteckige Fensteröffnung haben, an die die Plattenform der zugeordneten Befestigungsplatte angepasst ist.

Die in der Achsrichtung der imaginären Rahmenhauptachse gemessene Länge des Objekthalters entspricht zweckmäßigerweise zumindest im Wesentlichen und vorzugsweise genau der Länge des Montagerahmens.

Vorzugsweise entspricht eine orthogonal zur imaginären Rahmenhauptachse gemessene Breite des Objekthalters zumindest im Wesentlichen der entsprechend gemessenen Breite des Montagerahmens. Auf diese Weise kann der Objekthalter in der montierten Halteposition den Montagerahmen und die zwischen dem Objekthalter und dem Montagerahmen befindlichen weiteren Komponenten des Haltesystems vollständig unsichtbar verdecken.

Bei der Anwendung des erfindungsgemäßen Montageverfahrens ist es vorteilhaft, wenn der Montagerahmen über die angesprochene integrierte Nivellierungseinrichtung verfügt, mit deren Hilfe er zur Einstellung der gewünschten Wandposition horizontal ausgerichtet wird.

Bei einem Haltesystem, dessen Montagerahmen über mehrere Positionierfenster verfügt, findet ein vorteilhafter Verfahrensablauf zur Montage insbesondere in der Weise statt, dass
- nach dem Festkleben des über mehrere entlang einer imaginären Rahmenhauptachse mit Abstand nebeneinander angeordnete Positionierfenster verfügenden Montagerahmens in der Wandposition, durch jedes Positionierfenster hindurch jeweils eine von mehreren doppelseitig klebenden Selbstklebeeinheiten in ihrer Klebeposition an der Wand festgeklebt wird,
- worauf in jedes der Positionierfenster unter bezüglich des Montagerahmens formschlüssiger Ausrichtung jeweils eine von mehreren Befestigungsplatten eingesetzt und zum Fixieren der Befestigungsposition an der im zugeordneten Positionierfenster befindlichen Selbstklebeeinheit festgeklebt wird,
- worauf der Objekthalter mit seiner Kopplungseinrichtung an den Befestigungsstrukturen sämtlicher Befestigungsplatten befestigt wird, um die Halteposition einzunehmen.

Die Befestigungsstrukturen und die Kopplungseinrichtung sind insbesondere so aufeinander abgestimmt, dass der Objekthalter zur Montage in der Halteposition vertikal von oben her in die Befestigungsstrukturen einschiebbar ist.

Das erfindungsgemäße Haltesystem und das erfindungsgemäße Montageverfahren werden nachstehend unter Bezugnahme auf die beiliegenden Zeichnungen anhand vorteilhafter Ausführungsbeispiele näher erläutert. Hierbei können die jeweiligen Merkmale für sich allein oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren überwiegend schematisch dargestellt. Gleiche Bezugsziffern in den einzelnen Figuren bezeichnen dabei gleiche oder funktionsgleiche beziehungsweise hinsichtlich ihrer Funktionen einander entsprechende Elemente. Nicht alle Elemente sind mit Bezugszeichen versehen. Verschiedene Ansichten gleicher Elemente können unterschiedlich skaliert sein. Im Einzelnen zeigen:
- Figur 1: ein bevorzugtes Ausführungsbeispiel des erfindungsgemäßen Haltesystems in einer an einer Wand montierten nutzungsbereiten Gebrauchskonfiguration in perspektivischer Darstellung,
- Figur 2: in einer der Figur 1 entsprechenden Darstellungsweise ein weiteres Ausführungsbeispiel des erfindungsgemäßen Haltesystems,
- Figur 3: eine Explosionsdarstellung eines bevorzugten Aufbaus des erfindungsgemäßen Haltesystems, wobei einzelne Komponenten in strichpunktiert umrahmten Teilabbildungen (a), (b) und (c) separat auch nochmals vergrößert illustriert sind,
- Figur 4: das in Figur 1 gezeigte und in seinem Aufbau der Figur 3 entsprechende Haltesystem in einer isometrischen Explosionsdarstellung,
- Fig. 5-15: einen bevorzugten Ablauf eines Verfahrens zur Montage des Haltesystems unter Illustration aufeinanderfolgend ausführbarer Verfahrensschritte, wobei anhand der Abbildungen auch noch vorteilhafte konstruktive Besonderheiten des Haltesystems erläutert werden, wobei ferner in der Figur 15 das Haltesystem analog der Figuren 1 und 2 in der nach der Montage vorliegenden nutzungsbereiten Gebrauchskonfiguration gezeigt ist, und
- Figur 16: einen Querschnitt durch das Haltesystem entlang der Schnittebene XVI-XVI von Figur 15.

Das insgesamt mit Bezugsziffer 1 bezeichnete Haltesystem ist dafür ausgebildet, um zur Einnahme einer nutzungsbereiten Gebrauchsposition an einer insbesondere vertikalen Wand 2 montiert zu werden, bei der es sich insbesondere um eine Innenwand eines Gebäudes handelt, beispielsweise um die Wand eines Wohnraums. Das in der Gebrauchskonfiguration montierte Haltesystem 1 bietet die Möglichkeit zum Halten eines prinzipiell beliebigen Objekts 3, wobei es sich bei dem Objekt 3 beispielsweise um ein reines Anschauungsobjekt wie zum Beispiel einen Kunstgegenstand 3a handeln kann oder aber um ein Objekt 3 mit Nutzwert, beispielsweise ein Aufbewahrungsund/oder Präsentationsobjekt 3b für beliebige Gegenstände.

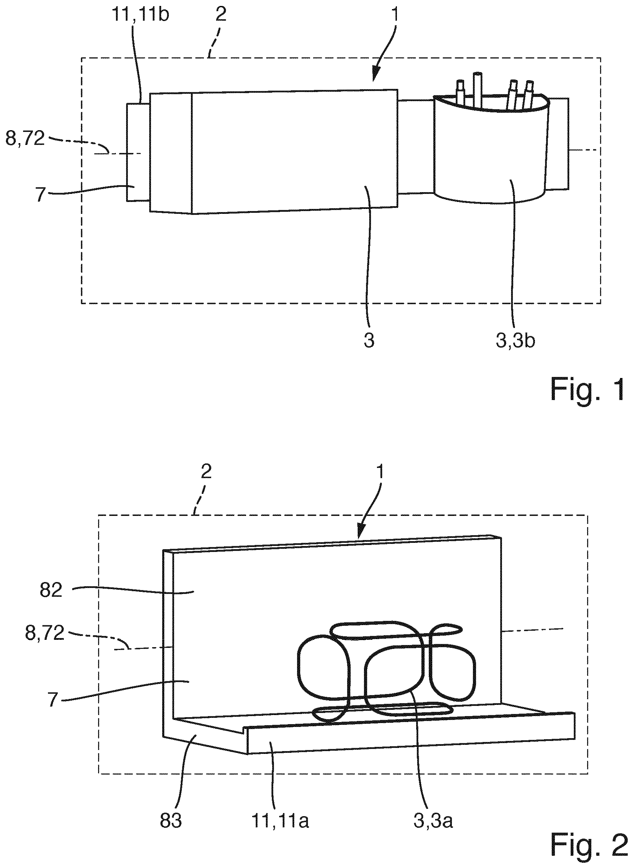

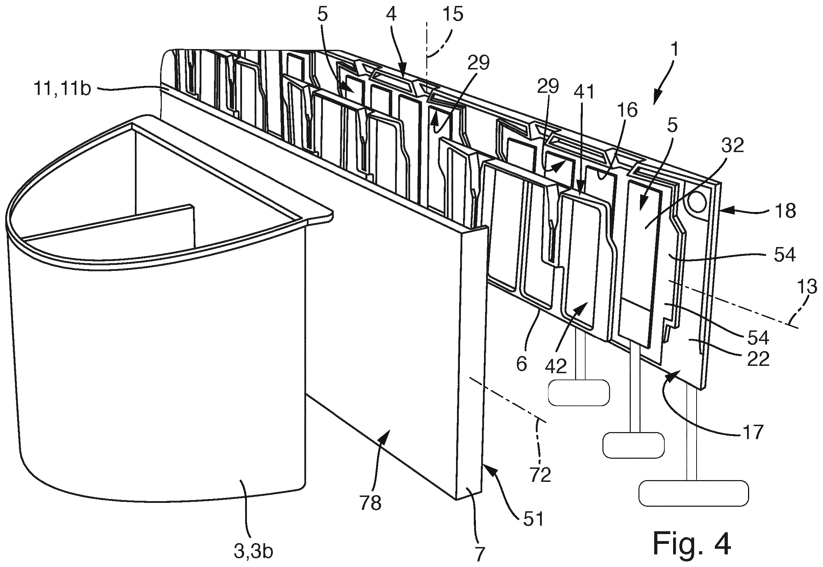

Exemplarisch ist als Objekt 3 in den Figuren 1, 3 und 4 ein becherförmiges Aufbewahrungs- und/oder Präsentationsobjekt 3b und in der Figur 2 ein Kunstgegenstand 3a gezeigt. In der Figur 1 ist zusätzlich ein kastenartiges Objekt 3 ersichtlich, wodurch verdeutlicht ist, dass das Haltesystem 1 zum gleichzeitigen Halten mehrerer Objekte 3 ausgebildet bzw. geeignet sein kann.

Insbesondere abhängig von seiner Art kann das Objekt 3 ein Bestandteil des Haltesystems 1 sein oder von der das Haltesystem 1 nutzenden Person als externes Objekt bereitgestellt werden.

Das Haltesystem 1 beinhaltet insbesondere einen Montagerahmen 4, mindestens eine doppelseitig klebende Selbstklebeeinheit 5, mindestens eine Befestigungsplatte 6 und einen Objekthalter 7.

Insbesondere abhängig von den gewünschten Dimensionen und dem Gewicht des zu haltenden Objekts 3 kann das Haltesystem 1 mit nur einer einzigen Selbstklebeeinheit 5 und nur einer einzigen Befestigungsplatte 6 ausgestattet sein oder aber über jeweils eine Mehrzahl dieser Bestandteile verfügen, wobei im letzteren Falle die Anzahl der Selbstklebeeinheiten 5 zweckmäßigerweise der Anzahl der Befestigungsplatten 6 entspricht.

Das beispielhaft illustrierte Haltesystem 1 enthält jeweils mehrere Selbstklebeeinheiten 5 und Befestigungsplatten 6, wobei die Anzahl exemplarisch jeweils vier Stück beträgt.

Eine Hauptfunktion des Montagerahmens 4 besteht darin, eine gewünschte räumliche Ausrichtung des montierten Haltesystems 1 vorzugeben. Hierbei ist insbesondere an die Vorgabe einer horizontalen Ausrichtung gedacht, bei der eine imaginäre Systemachse 8 des die nutzungsbereite Gebrauchskonfiguration einnehmenden Haltesystems 1 horizontal ausgerichtet ist.

Jede Selbstklebeeinheit 5 dient zur Klebefixierung einer Befestigungsplatte 6 an der Wand 2. Beim Ankleben einer Befestigungsplatte 6 wird selbige unmittelbar durch den Montagerahmen 4 wunschgemäß ausgerichtet. Jede Befestigungsplatte 6 fungiert als ein Schnittstellenelement zwischen einer Selbstklebeeinheit 5 und dem Objekthalter 7. Letzterer ist in der Gebrauchskonfiguration des Haltesystems 1 an den Befestigungsplatten 6 befestigt und aufgrund deren wandseitiger Klebefixierung folglich ebenfalls an der Wand 2 gehalten. Aufgrund eines eine gegenseitige Ausrichtung bewirkenden formschlüssigen Zusammenwirkens zwischen einer jeweiligen Befestigungsplatte 6 und dem Montagerahmen 4 haben die Befestigungsplatten 6 eine vorgegebene Ausrichtung, woraus eine für die Gebrauchskonfiguration gewünschte Sollausrichtung des an den Befestigungsplatten 6 angebrachten Objekthalters 7 resultiert.

Der Objekthalter 7 weist zweckmäßigerweise eine zum Halten des Objekts 3 ausgebildete Haltestruktur 11 auf. Eine solche Haltestruktur 11 kann beispielsweise entsprechend dem Ausführungsbeispiel der Figur 2 als eine Ablageplatte 11a ausgebildet sein, die ein Ablegen eines zu haltenden Objekts 3, 3a ermöglicht. **In** der montierten Gebrauchskonfiguration ragt die Ablageplatte 11a von der Wand 2 weg und erstreckt sich in einer horizontalen Ebene.

Eine andere Ausführungsform der Haltestruktur 11 ist aus den Figuren 1, 3, 4, 15 und 16 ersichtlich und ist als eine rinnenförmige Einhängevertiefung 11b ausgebildet, in die das zu haltende Objekt 3, 3b lösbar eingehängt werden kann. Das einzuhängende Objekt 3, 3b ist zu diesem Zweck beispielsweise mit einer Hakenstruktur 12 ausgestattet. Die Einhängevertiefung 11b erstreckt sich insbesondere parallel zu der Systemachse 8.

Es können ohne weiteres Haltestrukturen 11 unterschiedlicher Art an ein und demselben Objekthalter 7 verwirklicht sein, um eine besonders variable gleichzeitige oder alternative Nutzung zu ermöglichen.

Bei der weiteren Beschreibung wird davon ausgegangen, dass das Haltesystem 1 in der nutzungsbereiten Gebrauchskonfiguration derart ausgerichtet sein soll oder ist, dass sich die Systemachse 8 des Haltesystems 1 horizontal erstreckt. Dieser Zustand sei im Folgenden auch als horizontale Ausrichtung des Haltesystems 1 bezeichnet.

Der Montagerahmen 4 hat eine imaginäre Rahmenhauptachse 13, bei der es sich um die Längsachse des Montagerahmens 4 handelt, wenn der Montagerahmen 4 entsprechend dem illustrierten Ausführungsbeispiel eine längliche Gestalt hat. Der Montagerahmen 4 erstreckt sich in einer die Rahmenhauptachse 13 enthaltenden Rahmenebene 14, die durch die Rahmenhauptachse 13 und eine diesbezüglich orthogonale Rahmennebenachse 15 aufgespannt ist.

Der Montagerahmen 4 weist mehrere aufgrund einer noch näher zu erläuternden Positionierfunktion als Positionierfenster 16 bezeichnete Durchbrechungen auf, die den Montagerahmen 4 jeweils senkrecht zur Rahmenebene 14 durchsetzen und jeweils zu einer Vorderseite 17 und einer Rückseite 18 des Montagerahmens 4 ausmünden.

Die Anzahl der Positionierfenster 16 entspricht der Anzahl der vorhandenen Selbstklebeeinheiten 5 und Befestigungsplatten 6. Dementsprechend handelt es sich exemplarisch um insgesamt vier Positionierfenster 16.

Grundsätzlich ist die Anzahl der Positionierfenster 16 beliebig, wobei der Montagerahmen 4 im einfachsten Fall über nur ein einziges Positionierfenster 16 verfügt.

Die Positionierfenster 16 sind entlang der Rahmenhauptachse 13 in einer linearen Reihe mit Abstand zueinander angeordnet, vorzugsweise mit jeweils gleichem Abstand. Der Montagerahmen 4 hat einen bevorzugt aus Kunststoffmaterial bestehenden, über eine Flachgestalt verfügenden Rahmenkörper 22, der eine der Anzahl der Positionierfenster 16 entsprechende Anzahl in sich geschlossener Rahmenstrukturen 21 aufweist, die jeweils eine Umfangskontur des umrahmten Positionierfensters 16 vorgeben.

Insgesamt betrachtet hat der Rahmenkörper 22 insbesondere eine leiterartige Struktur.

Die Positionierfenster 16 haben zweckmäßigerweise jeweils einen zumindest im Wesentlichen rechteckigen Öffnungsquerschnitt, wobei die Abmessungen des Öffnungsquerschnittes in der Achsrichtung der Rahmenhauptachse 13 zweckmäßigerweise größer sind als in der Achsrichtung der Rahmennebenachse 15.

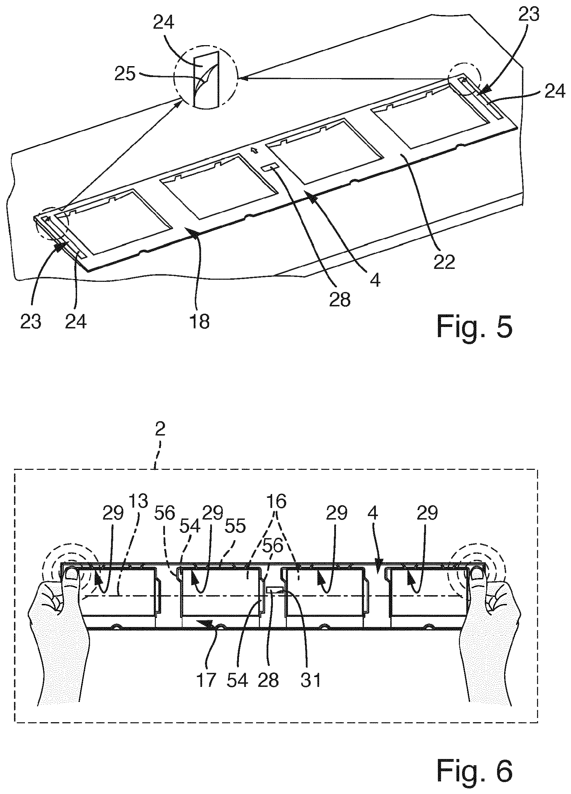

Der Montagerahmen 4 ist an seiner Rückseite 18 mit einer Selbstklebeeinrichtung 23 ausgestattet, mit der er an der Wand 2 unverrückbar festklebbar ist. Die von dem Montagerahmen 4 im festgeklebten Zustand eingenommene Position sei zur besseren Unterscheidung als Wandposition bezeichnet. Zweckmäßigerweise besteht die Selbstklebeeinrichtung 23 aus mehreren jeweils an einer der Rückseite 18 zugeordneten rückseitigen Fläche des Rahmenkörpers 22 angebrachten Klebestreifen 24. Die Klebestreifen 24 sind an dem Rahmenkörper 22 festgeklebt. Jeder Klebestreifen 24 hat eine vom Rahmenkörper 22 abgewandte, selbstklebende Klebefläche, die im Auslieferungszustand des Haltesystems 1, also vor Beginn der Montage, durch jeweils eine abziehbare flexible Schutzabdeckung 25 bedeckt sind. Diesbezüglich wird auf die Figur 5 verwiesen. Zur bestimmungsgemäßen Nutzung der Klebestreifen 24 sind die flexiblen Schutzabdeckungen 25 mit Fingern einer Hand abziehbar.

Die Klebestreifen 24 haben bevorzugt eine Längsgestalt und sind insbesondere mit einer zu der Rahmenhauptachse 13 orthogonalen Längsausrichtung am Montagerahmen 4 angeordnet.

Exemplarisch hat der Rahmenkörper 22 eine Mehrzahl von sich jeweils in der Achsrichtung der Rahmennebenachse 15 erstreckenden Querstegen 26, durch die die Positionierfenster 16 an den in der Achsrichtung der Rahmenhauptachse 13 weisenden Seiten begrenzt sind. Bevorzugt enthält die Selbstklebeeinrichtung 23 zwei Klebestreifen 24, die jeweils an einem der beiden äußeren Querstege 26 angebracht sind.

In der Achsrichtung der Rahmenhauptachse 13 unmittelbar aufeinanderfolgend angeordnete Querstege 26 sind jeweils durch zwei in der Achsrichtung der Rahmennebenachse 15 zueinander beabstandete Längsstege 27 einstückig miteinander verbunden. Jede der Rahmenstrukturen 21 setzt sich aus zwei Querstegen 26 und zwei Längsstegen 27 des Rahmenkörpers 22 zusammen.

Die Rahmenhauptachse 13 verläuft parallel zur Systemachse 8 und ist in der horizontal ausgerichteten Gebrauchskonfiguration des Haltesystems 1 folglich ebenfalls horizontal ausgerichtet.

Die Klebestreifen 24 sind zweckmäßigerweise im Auslieferungszustand des Haltesystems 1 am Rahmenkörper 22 vorangeklebt. Alternativ können sie auch als doppelseitig selbstklebende Klebestreifen beigelegt sein, die bei der erstmaligen Anwendung des Haltesystems 1 von der nutzenden Person an den Rahmenkörper 22 angeklebt werden.

Zweckmäßigerweise hat der Montagerahmen 4 eine integrierte Nivellierungseinrichtung 28, die nutzbar ist, um den Montagerahmen 4 exakt in der gewünschten Wandposition an der Wand 2 anzubringen. Die Nivellierungseinrichtung 28 befindet sich exemplarisch im Bereich der Vorderseite des Montagerahmens 4, so dass sie gut von vorne her sichtbar ist, wenn der Montagerahmen 4 mit der Rückseite 18 voraus an die Wand 2 angesetzt wird.

Exemplarisch verfügt der Rahmenkörper 22 in einem der Querstege 26, insbesondere in einem mittigen Quersteg 26, über eine Fixierdurchbrechung 31, in der die Nivellierungseinrichtung 28 fixiert ist, beispielsweise durch Einpressen oder durch Verkleben. Die Nivellierungseinrichtung 28 kann auf diese Weise sowohl von der Rückseite 18 als auch von der Vorderseite 17 her eingesehen werden.

Die Nivellierungseinrichtung 28 erlaubt insbesondere eine präzise horizontale Ausrichtung der Rahmenhauptachse 13 des Montagerahmens 4.

Bevorzugt ist die Nivellierungseinrichtung 28 als eine Libelle ausgebildet, insbesondere als eine Röhrenlibelle. Bei dem illustrierten Ausführungsbeispiel ist dies der Fall.

Der mit einer Nivellierungseinrichtung 28 ausgestattete Montagerahmen 4 lässt sich wie eine Wasserwaage handhaben und somit präzise horizontal ausrichten. Man kann sagen, dass der Montagerahmen 4 über eine integrierte Wasserwaagenfunktion verfügt.

Sofern keine integrierte Nivellierungseinrichtung 28 vorhanden ist, eignet sich die bevorzugt lineare Längserstreckung des Rahmenkörpers 22 sehr gut für das Anlegen einer zur Ausrichtung verwendeten separaten Wasserwaage.

Das Haltesystem 1 verfügt über eine der Anzahl der Positionierfenster 16 entsprechende Anzahl der schon erwähnten, doppelseitig klebenden Selbstklebeeinheiten 5. Die Selbstklebeeinheiten 5 sind in ihren Abmessungen so gestaltet, dass sie im eine Wandposition einnehmenden Zustand des Montagerahmens 4 jeweils durch eines der Positionierfenster 16 hindurch an die Wand 2 angeklebt werden können. Zur besseren Unterscheidung sei die im angeklebten Zustand einer jeweiligen Selbstklebeeinheit 5 bezeichnete Position an der Wand 2 als Klebeposition bezeichnet.

Die Selbstklebeeinheiten 5 liegen dem Haltesystem 1 im Auslieferungszustand vor der Montage als lose Systembestandteile bei.

Jede Selbstklebeeinheit 5 hat eine plattenartige Flachgestalt und verfügt über mehrere doppelseitig selbstklebende Klebestreifen 32, die jeweils eine Längserstreckung haben. Die mehreren Klebestreifen 32 jeder Selbstklebeeinheit 5 - exemplarisch handelt es sich um jeweils vier Klebestreifen 32 - sind mit zueinander paralleler Längserstreckung nebeneinander angeordnet und bilden gemeinsam eine rückseitige Klebefläche 33 und eine vorderseitige Klebefläche 34. Jeder einzelne Klebestreifen 32 hat an einander entgegengesetzten Streifenflächen jeweils einen von zwei streifenförmigen Klebeflächenabschnitten, wobei die zur gleichen Seite weisenden Klebeflächenabschnitte gemeinsam in einem Fall die rückseitige Klebefläche 33 und im anderen Fall die vorderseitige Klebefläche 34 der Selbstklebeeinheit 5 bilden.

Vor ihrer Nutzung enthält jede Selbstklebeeinheit 5 zwei flexible Schutzabdeckungen, die zur besseren Unterscheidung als erste und zweite Schutzabdeckungen 35, 36 bezeichnet werden, wobei die erste Schutzabdeckung 35 die rückseitige Klebefläche 33 abdeckt, während die zweite Schutzabdeckung 36 die vorderseitige Klebefläche 34 abdeckt.

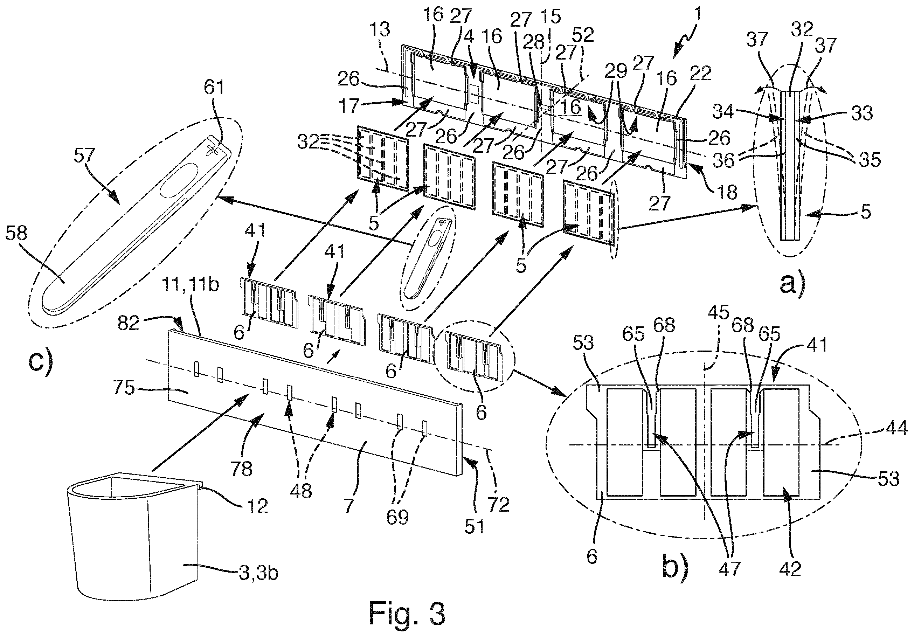

Die beiden Schutzabdeckungen 35, 36 sind gemäß den in Figur 3(a) ersichtlichen Pfeilen 37 von der zugeordneten Klebefläche 33, 34 abziehbar, wenn die betreffende Klebefläche 33, 34 genutzt werden soll.

Bei den Schutzabdeckungen 35, 36 handelt es sich insbesondere um ein dünnes Papier.

Insgesamt haben die Selbstklebeeinheiten 5 zweckmäßigerweise einen rechteckigen Umriss, und zwar mit Abmessungen, die es erlauben, die Selbstklebeeinheiten 5 mit der Rückseite 18 voraus durch jeweils eines der Positionierfenster 16 hindurchzuführen.

Jede Selbstklebeeinheit 5 kann eine andere als die exemplarische Vierzahl von doppelseitig selbstklebenden Klebestreifen 32 aufweisen. Insbesondere wenn ein relativ kleinbauendes Haltesystem 1 bereitgestellt werden soll, besteht die Möglichkeit, jede Selbstklebeeinheit 5 mit nur einem einzigen Klebestreifen 32 auszustatten. In diesem Fall bilden die beiden streifenförmigen Klebeflächenabschnitte des einzigen Klebestreifens 32 die rückseitige und vorderseitige Klebefläche 33, 34 der Selbstklebeeinheit 5.

Bei den Klebestreifen 32 handelt es sich insbesondere um Klebestreifen 32 einer Art, die durch Zug entklebbar ist. Durch das Einleiten einer Zugkraft lässt sich das Klebestreifenmaterial derart verformen und insbesondere dehnen, dass die zugeordneten Klebestreifenflächen eine bis dahin mit einem Klebepartner eingenommene Klebeverbindung rückstandsfrei aufheben. Für die Einleitung der Zugkraft ist bei jedem Klebestreifen 32 einer der beiden axialen Endabschnitte als eine Ziehzunge 38 ausgebildet, die keine Klebeeigenschaften hat und sich mit den Fingern einer Hand ergreifen lässt, um die Zugkraft auszuüben. Zweckmäßigerweise hat die Ziehzunge 38 keine selbstklebenden Eigenschaften, so dass sie an den aufgebrachten Schutzabdeckungen 35, 36 nicht haftet.

Die mehreren Klebestreifen 32 einer jeden Selbstklebeeinheit 5 sind so ausgerichtet, dass ihre Ziehzungen 38 alle in die gleiche Richtung weisen.

In der Figur 3 sind die mehreren doppelseitig selbstklebenden Klebestreifen 32 bei jeder Selbstklebeeinheit 5 gestrichelt angedeutet, da sie von der zweiten Schutzabdeckung 36 verdeckt sind.

Die Teilabbildung gemäß Figur 3(a) zeigt eine Seitenansicht einer Selbstklebeeinheit 5, aus der ersichtlich ist, wie die Klebestreifen 32 sandwichartig zwischen den beiden Schutzabdeckungen 35, 36 angeordnet sind, die in der gestrichelt angedeuteten Weise gemäß Pfeilen 37 zum Freilegen der jeweils zugeordneten Klebefläche 33, 34 abziehbar sind.

Die schon angesprochenen Befestigungsplatten 6 sind in dem Haltesystem 1 in einer der Anzahl der Positionierfenster 16 entsprechenden Anzahl enthalten. Sie sind untereinander zweckmäßigerweise identisch ausgebildet und stimmen insbesondere hinsichtlich ihrer randseitigen Umfangskontur 41 überein.

Jede Befestigungsplatte 6 hat zwei einander entgegengesetzte großflächige Plattenflächen, die sich an einer Vorderseite 42 und an einer Rückseite 43 der jeweiligen Befestigungsplatte 6 befinden. Die randseitige Umfangskontur 41 umrahmt die Vorderseite 42 und die Rückseite 43.

Die Plattenebene jeder Befestigungsplatte 6 ist von einer imaginären ersten Plattenachse 44 und einer dazu orthogonalen imaginären zweiten Plattenachse 45 aufgespannt. Diese beiden Plattenachsen 44, 45 sind insbesondere aus der Teilabbildung der Figur(b) ersichtlich.

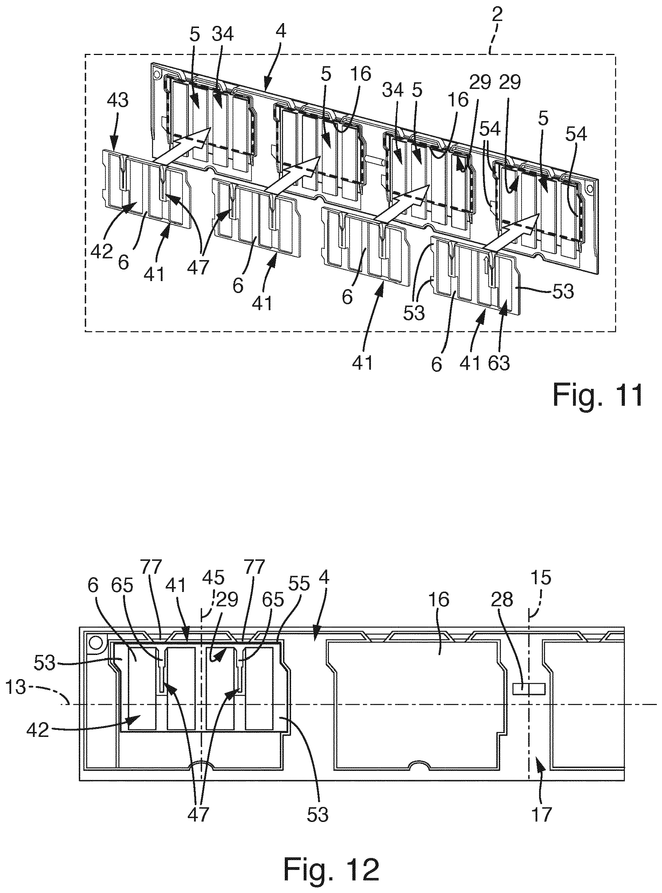

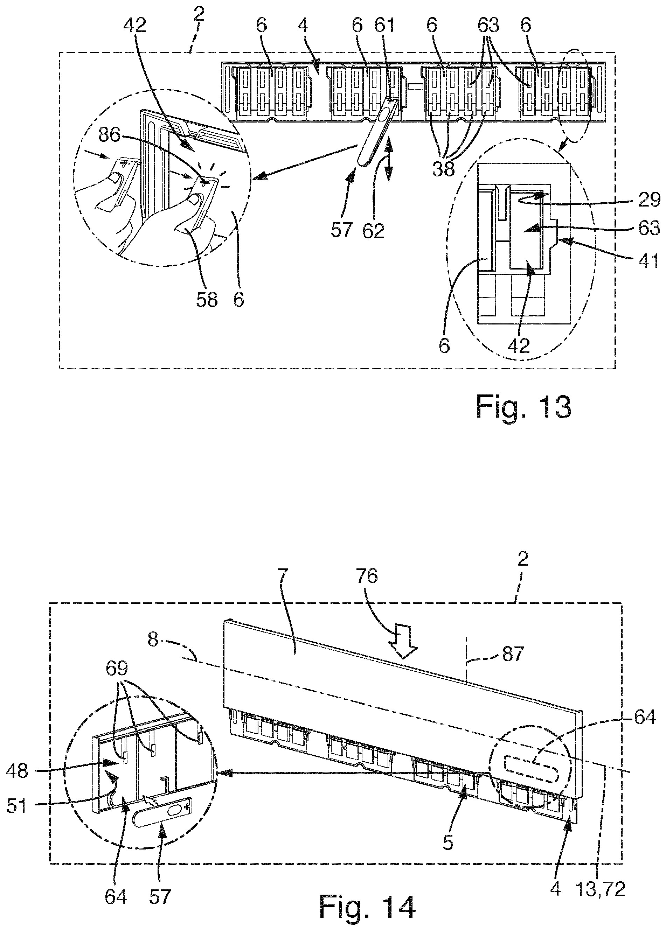

Die randseitige Umfangskontur 41 jeder Befestigungsplatte 6 ist auf die durch den Rahmenkörper 22 definierte Umfangskontur 29 eines jeweiligen Positionierfensters 16 derart abgestimmt, dass in jedes Positionierfenster 16 eine Befestigungsplatte 6 mit der Rückseite 43 voraus formschlüssig einsetzbar ist. Die daraus resultierende, im Folgenden auch als Einsetzposition bezeichnete eingesetzte Position der Befestigungsplatten 6 ist beispielsweise aus den Figuren 12 und 13 ersichtlich.

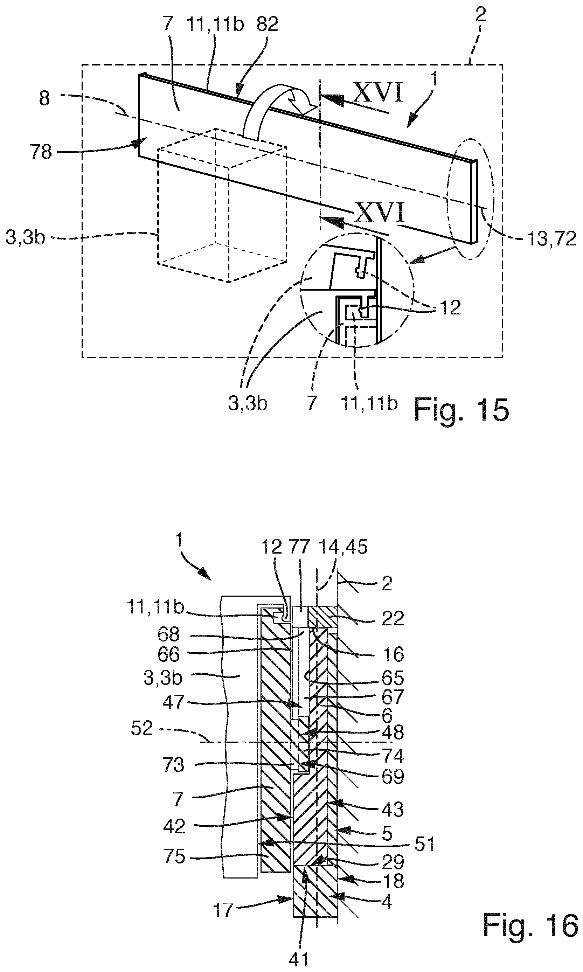

**In** der nutzungsbereiten Gebrauchsposition des Haltesystems 1 handelt es sich bei der Einsetzposition jeder Befestigungsplatte 6 gleichzeitig um eine Befestigungsposition, in der die Befestigungsplatte 6 innerhalb des zugeordneten Positionierfensters 16 mit ihrer Rückseite 43 an die vorderseitige Klebefläche 34 der in dem Positionierfenster 16 in der Klebeposition befindlichen Selbstklebeeinheit 5 angeklebt ist. Die Befestigungsposition ist beispielsweise aus den Figuren 13 und 16 ersichtlich.

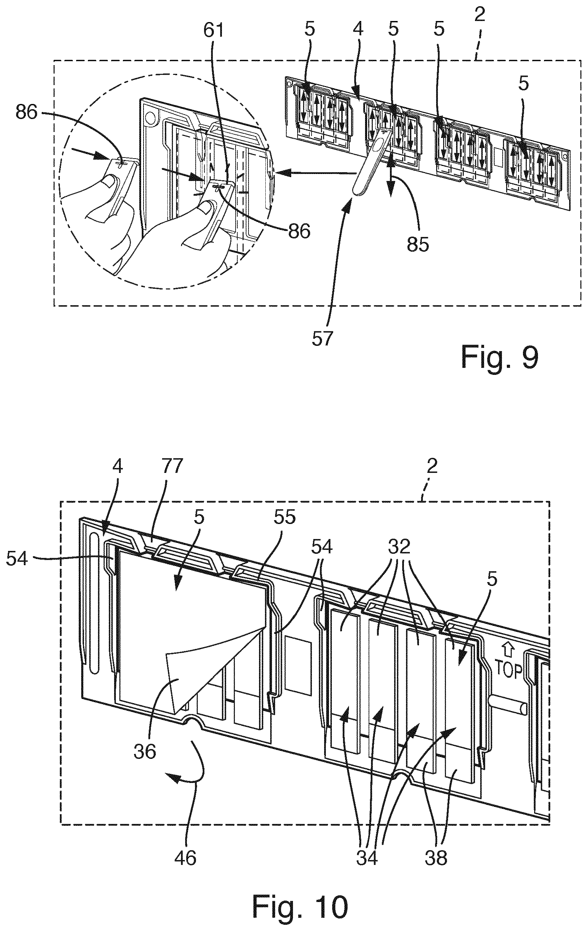

Bevor eine Befestigungsplatte 6 zum Festkleben in ein Positionierfenster 16 eingesetzt wird, ist von der darin in der Klebeposition fixierten Selbstklebeeinheit 5 gemäß dem in Figur 10 illustrierten Pfeil 46 die zweite Schutzabdeckung 36 abzuziehen, so dass die vorderseitige Klebefläche 34 zur Nutzung zugänglich ist.

Exemplarisch ist somit jede Befestigungsplatte 6 in ihrer Befestigungsposition an der von sämtlichen Klebestreifen 24 definierten vorderseitigen Klebefläche 34 der in der Klebeposition befindlichen, zugeordneten Selbstklebeeinheit 5 festgeklebt.

Der in der Einsetzposition beziehungsweise Befestigungsposition vorliegende Formschluss zwischen jeder Befestigungsplatte 6 und dem Montagerahmen 4 resultiert insbesondere daraus, dass die Umfangskonturen 29, 41 des Positionierfensters 16 und der Befestigungsplatte 6 unkreisförmig und zugleich komplementär zueinander gestaltet sind. Die Umfangskonturen 29, 41 sind insbesondere so aufeinander abgestimmt, dass jede Befestigungsplatte 6 zur Anbringung in ihrer Befestigungsposition nur in einer einzigen bezüglich des Montagerahmens 4 eingenommenen Relativposition in das zugeordnete Positionierfenster 16 einsetzbar ist, wobei es sich bei dieser Relativposition um die erwähnte Einsetzposition handelt.

Die formschlüssige Anpassung ist exemplarisch so gewählt, dass in der Einsetzposition und folglich auch in der Befestigungsposition bei jeder Befestigungsplatte 6 die erste Plattenachse 44 parallel zur Rahmenhauptachse 13 und die zweite Plattenachse 45 parallel zur Rahmennebenachse 15 verläuft. Die Plattenebene jeder Befestigungsplatte 6 erstreckt sich somit insbesondere parallel zur Rahmenebene 14 des Montagerahmens 4.

Die Rückseite 43 der Befestigungsplatte 6 ist zweckmäßigerweise eben ausgebildet, so dass in der Befestigungsposition ein großflächiger Kontakt mit der von sämtlichen Klebestreifen 32 definierten vorderseitigen Klebefläche 34 gewährleistet ist.

An ihrer Vorderseite 42 ist jede Befestigungsplatte 6 mit einer hinsichtlich ihrer bevorzugten Ausgestaltung weiter unten noch beschriebenen Befestigungsstruktur 47 versehen. Die Befestigungsstruktur 47 erlaubt ein insbesondere lösbares Befestigen des Objekthalters 7.

Der Objekthalter 7 verfügt über eine Kopplungseinrichtung 48, die sich an einer Rückseite 51 des Objekthalters 7 befindet, die beispielsweise in Figur 3 vom Betrachter abgewandt ist, so dass die Kopplungseinrichtung 48 mangels unmittelbarer Sichtbarkeit dort gestrichelt angedeutet ist. Der Objekthalter 7 kann über seine Kopplungseinrichtung 48 mit den Befestigungsstrukturen 47 sämtlicher vorhandener, in der Befestigungsposition befindlicher Befestigungsplatten 6 in einen formschlüssigen Eingriff gebracht werden, so dass er an allen vorhandenen Befestigungsplatten 6 gemeinsam befestigt ist.

Die im befestigten Zustand von dem Objekthalter 7 eingenommene Position sei zur besseren Unterscheidung als Halteposition des Objekthalters 7 bezeichnet. Die Halteposition ist beispielsweise aus den Figuren 1, 2, 15 und 16 gut ersichtlich.

Der Objekthalter 7 ist in seiner Halteposition nicht nur den Befestigungsplatten 6, sondern auch dem Montagerahmen 4 in einer zur Rahmenebene 14 des Montagerahmens 4 senkrechten Richtung vorgelagert, die im Folgenden zur besseren Unterscheidung als Normalenrichtung 52 des Montagerahmens 4 bezeichnet wird und in der Zeichnung durch eine strichpunktierte Linie angedeutet ist. Dabei wird der Montagerahmen 4 an seiner Vorderseite 17 zumindest partiell durch den Objekthalter 7 abgedeckt. Bevorzugt ist der Objekthalter 7 entsprechend dem illustrierten Ausführungsbeispiel so gestaltet, dass er in der Halteposition den Montagerahmen 4 bei Betrachtung in der Normalenrichtung 52 von vorne her vollständig abdeckt.

Zweckmäßigerweise verfügt jede Befestigungsplatte 6 randseitig über mindestens einen seitlich, das heißt in der Plattenebene vorstehenden Abstützvorsprung 53. Exemplarisch ist jede Befestigungsplatte 6 mit mehreren solcher Abstützvorsprünge 53 ausgebildet, die über den randseitigen Umfang der Befestigungsplatte 6 verteilt angeordnet sind. Jeder Abstützvorsprung 53 ragt flügelartig oder zungenartig von der Befestigungsplatte 6 weg.

In den Figuren 3, 4, 12 und 13 ist eine mögliche Ausgestaltung von Befestigungsplatten 6 gezeigt, bei denen an jeder der beiden in der Achsrichtung der ersten Plattenachse 44 weisenden Randseiten der Befestigungsplatte 6 einer von zwei Abstützvorsprüngen 53 angeordnet ist. Jeder Abstützvorsprung 53 hat eine Längserstreckung in der Achsrichtung der zweiten Plattenachse 45, wobei es sich insbesondere um voneinander unterschiedlichen Längenabmessungen handelt. Jeder Abstützvorsprung 53 erstreckt sich ausgehend von einer der beiden in der Achsrichtung der zweiten Plattenachse 45 weisenden Randseiten der Befestigungsplatte 6, und zwar vorzugsweise ausgehend von einander entgegengesetzten Randseiten.

In der Figur 11 und in der Ausschnittsvergrößerung der Figur 13 ist beispielhaft eine andere Anordnung und Gestaltung der Abstützvorsprünge 53 gezeigt. Hier befinden sich an einer der beiden in der ersten Plattenachse 44 weisenden Randseiten zwei zueinander beabstandete Abstützvorsprünge 53, während an der entgegengesetzten Randseite insbesondere mittig nur ein einziger Abstützvorsprung 53 vorhanden ist.

Die Abstützvorsprünge 53 tragen zur Definition der randseitigen Umfangskontur 41 der Befestigungsplatte 6 bei. Sie dienen insbesondere zur Abstützung der Befestigungsplatte 6 gegenüber dem Montagerahmen 4 in der Normalenrichtung 52 bei Einnahme der Befestigungsposition. Letzteres wird beispielhaft dadurch erreicht, dass die ein jeweiliges Positionierfenster 16 umrahmenden Rahmenstrukturen 21 des Montagerahmens 4 jeweils so gestaltet sind, dass sie mehrere in der Rahmenebene 14 in die Öffnung des umrahmten Positionierfensters 16 hineinragende Abstützabschnitte 54 aufweisen, an denen die Befestigungsplatten 6 in ihrer Einsetzposition mit ihren Abstützvorsprüngen 53 von der Vorderseite 17 her anliegen.

Beispielsweise ist jedes Positionierfenster 16 an der Rückseite 18 des Montagerahmens 4 zumindest teilweise von einem einstückig in den Rahmenkörper 22 integrierten Fensterrahmen 55 umrahmt, der die Umfangskontur 29 des Positionierfensters 16 definiert und der im Bereich der Abstützabschnitte 54 jeweils eine Ausbuchtung 56 hat, die von dem in den Rahmenkörper 22 integrierten Abstützabschnitt 54 ausgefüllt ist.

Zum sicheren Festkleben der Befestigungsplatten 6 sollten die Befestigungsplatten 6 während des Montagevorganges möglichst fest an die Selbstklebeeinheiten 5 angedrückt werden. Um dieses Andrücken sehr einfach zu ermöglichen, ist das Haltesystem 1 zweckmäßigerweise mit einem manuell handhabbaren Andrückwerkzeug 57 ausgestattet, das zum Ausüben einer Andrückkraft nutzbar ist.

Das Andrückwerkzeug 57 hat eine längliche, beispielsweise stab- oder leistenförmige Gestalt und verfügt über einen mit einer Hand ergreifbaren Griffabschnitt 58 sowie einen insbesondere stirnseitig angeordneten, bevorzugt streifenartig konturierten Andrückabschnitt 61. Das Andrückwerkzeug 57 ist bei der Montage des Haltesystems 1 derart nutzbar, dass es mit einer Hand an dem Griffabschnitt 58 ergriffen und mit dem Andrückabschnitt 61 gemäß Figur 13 an die Vorderseite 42 der jeweiligen Befestigungsplatte 6 angedrückt wird. Das Andrücken erfolgt insbesondere in einer durch einen Doppelpfeil angedeuteten, hin und her gehenden Reibebewegung 62 entlang der Rückseite 43.

Um ein zielgerichtetes Andrücken zu begünstigen, ist es zweckmäßig, wenn jede Befestigungsplatte 6 an der Vorderseite 42 in jedem Bereich, der in der Befestigungsposition einen Klebestreifen 32 der zugeordneten Selbstklebeeinheit 5 überdeckt, eine sich entlang des überdeckten Klebestreifens 32 erstreckende, strukturell ersichtliche Andrückbahn 63 aufweist. Das Andrückwerkzeug 57 kann mit seinem Andrückabschnitt 61 an die Andrückbahn 63 angedrückt und an dieser entlanggerieben werden.

Vorzugsweise ist jede Andrückbahn 63 entsprechend dem illustrierten Ausführungsbeispiel von einer längsnutartigen Vertiefung der Befestigungsplatte 6 an der Vorderseite 42 gebildet.

Gemäß der Figur 9 kann das Andrückwerkzeug 57 durch entsprechende Handhabung auch genutzt werden, um die Selbstklebeeinheiten 5 in ihre Klebeposition an die Wand 2 anzudrücken.

Zur verliersicheren Aufbewahrung des als eine individuelle Komponente vorliegenden Andrückwerkzeuges 57 bei Nichtgebrauch ist zweckmäßigerweise an der Rückseite 51 des Objekthalters 7 eine aus Figur 14 ersichtliche Aufnahmevertiefung 64 ausgebildet. Nach Abschluss seiner Nutzung und vor der Montage des Objekthalters 7 ist das Andrückwerkzeug 57 unter lösbarer Fixierung in die Aufnahmevertiefung 64 einsetzbar. Bevorzugt ist das eingesetzte Andrückwerkzeug 57 durch Rastmittel leicht abnehmbar vom Objekthalter 7 gehalten.

Bei dem illustrierten Ausführungsbeispiel hat jede Befestigungsplatte 6 eine bevorzugte Ausgestaltung der Befestigungsstruktur 47, bei der jede Befestigungsstruktur 47 über mehrere Befestigungsschlitze 65 verfügt, die mit zueinander paralleler Längsausrichtung an der Vorderseite 42 einer jeweiligen Befestigungsplatte 6 ausgebildet sind. Exemplarisch erstrecken sich die Befestigungsschlitze 65 in der Achsrichtung der zweiten Plattenachse 45, so dass sie in der horizontalen Gebrauchskonfiguration des Haltesystems 1 vertikal verlaufen. Bei Einnahme der Einsetzposition einer Befestigungsplatte 6 erstrecken sich deren Befestigungsschlitze 65 in der Achsrichtung der Rahmennebenachse 15 des Montagerahmens 4.

Die exemplarisch in einer Anzahl von zwei Stück vorhandenen mehreren Befestigungsschlitze 65 sind quer zu ihrer Längserstreckung mit Abstand zueinander angeordnet.

Jeder Befestigungsschlitz 65 hat eine hinterschnittene Querschnittskontur. Bevorzugt ist der Schlitzquerschnitt T-förmig gestaltet, mit einer längsseitigen Schlitzöffnung 66 an der Vorderseite 42 und einem sich in der Schlitztiefenrichtung daran anschließenden breiteren Verankerungsabschnitt 67. Jeder Befestigungsschlitz 65 hat außerdem eine stirnseitig offene Einführöffnung 68, die in der Befestigungsposition vertikal nach oben weist. Am entgegengesetzten axialen Ende ist der jeweilige Befestigungsschlitz 65 geschlossen.

Jede Befestigungsplatte 6 kann alternativ über mehr als zwei Befestigungsschlitze 65 oder über nur einen einzigen Befestigungsschlitz 65 verfügen.

Die Kopplungseinrichtung 48 des Objekthalters 7 enthält exemplarisch eine Mehrzahl von Kopplungsvorsprüngen 69, deren Anzahl der Gesamtanzahl an Befestigungsschlitzen 65 sämtlicher Befestigungsplatten 6 des Haltesystems 1 entspricht.

Der Objekthalter 7 hat eine imaginäre Halterhauptachse 72, die exemplarisch mit der Längsachse des bevorzugt eine Längsgestalt aufweisenden Objekthalters 7 zusammenfällt. Die Kopplungsvorsprünge 69 sind in der Achsrichtung der Halterhauptachse 72 mit Abstand aufeinanderfolgend aneinandergereiht. Die gegenseitigen Abstände entsprechen den gegenseitigen Abständen der Befestigungsschlitze 65 der in der Befestigungsposition befindlichen Befestigungsplatten 6.

Jeder Kopplungsvorsprung 69 hat einen zu einem Befestigungsschlitz 65 komplementären Querschnitt und verfügt beispielhaft über einen Halsabschnitt 73 und einen diesbezüglich breiteren Kopfabschnitt 74. Mit dem bevorzugt stegförmigen Halsabschnitt 73 ist jeder Kopplungsvorsprung 69 rückseitig an einem Objekthalter-Hauptkörper 75 des Objekthalters 7 befestigt.

Zur Montage an den Befestigungsplatten 6 kann der Objekthalter 7 gemäß Pfeil 76 in Figur 14 in einer Weise auf die Befestigungsplatten 6 aufgeschoben werden, dass die Kopplungsvorsprünge 69 durch die Einführöffnungen 68 hindurch formschlüssig in die Befestigungsschlitze 65 eingreifen. Die durch den Pfeil 76 illustrierte Einschubrichtung verläuft in der horizontal ausgerichteten Gebrauchskonfiguration des Haltesystems 1 vertikal.

Die Befestigungsschlitze 65 sind insbesondere so platziert, dass sie jeweils einem Bereich gegenüberliegen, der zwischen zwei benachbarten Klebestreifen 32 der zugeordneten Selbstklebeeinheit 5 liegt.

Der Rahmenkörper 22 des Montagerahmens 4 weist zweckmäßigerweise im Umfangsbereich jedes Positionierfensters 16 eine trichterartige Einführstruktur 77 auf, die bei der gemäß Pfeil 76 erfolgenden Einschubmontage des Objekthalters 7 das Einfädeln der Kopplungsvorsprünge 69 in die einzelnen Befestigungsschlitze 65 erleichtern. Die Einführstrukturen 77 sind so platziert, dass sie jeweils in axialer Verlängerung eines Befestigungsschlitzes 65 der in die Befestigungsposition an den Montagerahmen 4 angesetzten Befestigungsplatte 6 angeordnet sind. Exemplarisch befinden sich die Einführstrukturen 77 in den bei horizontaler Ausrichtung des Montagerahmens 4 vertikal oben angeordneten Längsstegen 27.

Der Objekthalter 7 verfügt beispielsweise über einen plattenförmigen Objekthalter-Hauptkörper 75, der insbesondere eine Längsgestalt hat, so dass man die Formgebung auch als leistenförmig bezeichnen kann. Dies verleiht dem Objekthalter 7 insgesamt eine ansprechende plattenförmige oder leistenförmige Optik. Eine der beiden großflächigen Plattenflächen des Objekthalters 7 definiert die Rückseite 51 des Objekthalters 7, die andere eine in der Halteposition von dem Montagerahmen 4 in der Normalenrichtung 52 abgewandte Vorderseite 78.

Eine als Einhängevertiefung 11b gestaltete Haltestruktur 11 ist bei dem vorgenannten Ausführungsbeispiel im Bereich eines oberen Längsrandes 82 des Objekthalters 7 ausgebildet und erstreckt sich in der Achsrichtung der Halterhauptachse 72.

Bei einer aus Figur 2 ersichtlichen Gestaltung des Objekthalters 7 hat der Objekthalter-Hauptkörper 75 eine L-förmige Gestalt, wobei ein in der Halteposition vertikaler Schenkelabschnitt 83 rückseitig die Kopplungseinrichtung 48 aufweist und ein nach vorne ragender horizontaler Schenkelabschnitt 84 eine als Ablageplatte 11a ausgebildete Haltestruktur 11 definiert.

In der an einer insbesondere vertikalen Wand 2 montierten nutzungsbereiten Gebrauchskonfiguration des Haltesystems 1 befindet sich der Montagerahmen 4 in der Wandposition, jede doppelseitig klebende Selbstklebeeinheit 5 in der Klebeposition, jede Befestigungsplatte 6 in der Befestigungsposition und der Objekthalter 7 in der Halteposition.

Unter ergänzender Erläuterung weiterer konstruktiver Merkmale wird nachfolgend ein besonders vorteilhafter Ablauf eines Verfahrens zur Montage des Haltesystems 1 beschrieben.

Ausgangspunkt des Verfahrens ist ein in seinen noch nicht zusammengefügten Komponenten vorliegendes Haltesystem 1 in der Ausgestaltung gemäß Figur 3. Mit diesen Einzelteilen kann das Haltesystem 1 mit einer geeigneten Verpackung zur bestimmungsgemäßen Nutzung bereitgestellt werden.

In einem aus Figur 5 ersichtlichen ersten Verfahrensschritt werden von dem Montagerahmen 4 die Schutzabdeckungen 35 der beiden Klebestreifen 24 der Selbstklebeeinrichtung 23 entfernt.

In einem aus Figur 6 ersichtlichen zweiten Verfahrensschritt wird der Montagerahmen 4 mit seiner die Selbstklebeeinrichtung 23 aufweisenden Rückseite 18 voraus an die zu bestückende Wand 2 gehalten, unter Nutzung der Nivellierungseinrichtung 28 wunschgemäß ausgerichtet und in der ausgerichteten Position manuell fest an die Wand 2 angedrückt. Auf diese Weise wird der Montagerahmen 4 in der gewünschten Wandposition festgeklebt, bei der die Rahmenhauptachse 13 horizontal ausgerichtet ist. Die Andrückkraft kann beispielsweise mit einem Finger jeder Hand in dem Bereich in den Montagerahmen 4 eingeleitet werden, in dem sich rückseitig jeweils einer der beiden Klebestreifen 24 befindet.

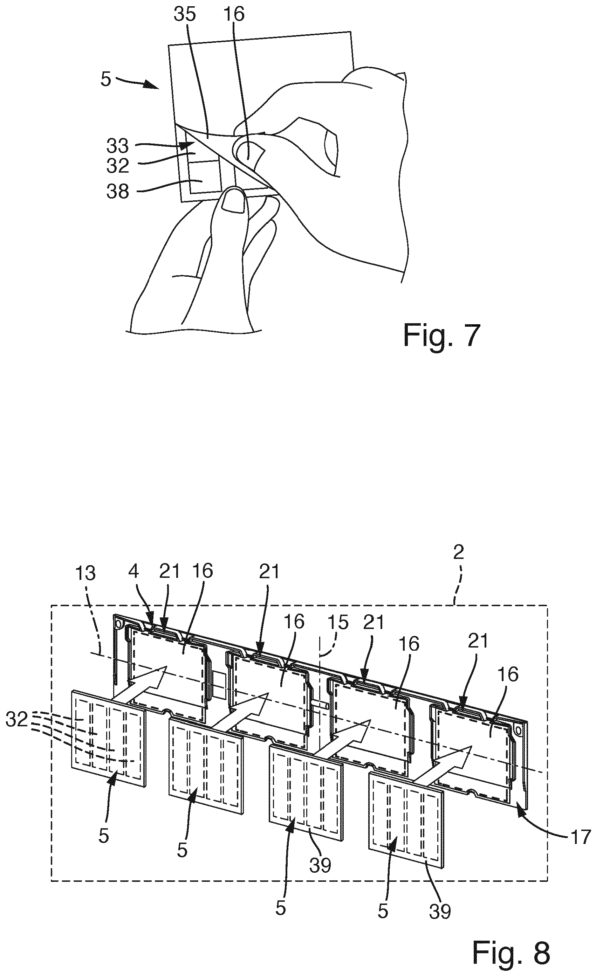

In einem darauffolgenden dritten Verfahrensschritt werden die Selbstklebeeinheiten 5 in ihre Klebeposition an die Wand 2 angeklebt. Ein Vorbereitungsschritt hierfür ist in Figur 7 illustriert und besteht im Abziehen der hinteren, ersten Schutzabdeckung 35 von der rückseitigen Klebefläche 33 der Selbstklebeeinheiten 5. Nach diesem Vorbereitungsschritt werden die Selbstklebeeinheiten 5 gemäß Figur 8 nacheinander durch jeweils eines der Positionierfenster 16 hindurch zur Einnahme ihrer Klebeposition mit ihrer rückseitigen Klebefläche 33 an die Wand 2 angeklebt. Bei diesem Klebevorgang werden gleichzeitig sämtliche Klebestreifen 32 einer jeweiligen Selbstklebeeinheit 5 an die Wand 2 angeklebt.

Die Klebepositionen sind in Figur 8 im Bereich der Positionierfenster 16 gestrichelt angedeutet. Bevorzugt kommt nur der die rückseitige Klebefläche 33 aufweisende Abschnitt der Selbstklebeeinheit 5 im jeweiligen Positionierfenster 16 zu liegen. Der die Ziehzungen 38 aufweisende, als Ziehzungenabschnitt 39 bezeichnete Abschnitt der Selbstklebeeinheit 5 bleibt zweckmäßigerweise außerhalb des Positionierfensters 16 und liegt an der Vorderseite 17 auf dem unteren Längssteg 27 des Rahmenkörpers 22 auf, so dass er für ein späteres eventuelles Ablösen gut zugänglich ist. Die von der Selbstklebeeinheit 5 eingenommene Fläche ist also bevorzugt größer als die Öffnungsfläche des jeweils zugeordneten Positionierfensters 16.

Die Selbstklebeeinheiten 5 können allerdings auch so ausgebildet sein, dass sie in der Klebeposition zur Gänze innerhalb jeweils eines Positionierfensters 16 zu liegen kommen.

In einem aus Figur 9 ersichtlichen vierten Verfahrensschritt werden die Selbstklebeeinheiten 5 durch Anwendung des Andrückwerkzeuges 57 fest an die Wand 2 angedrückt. Das Andrückwerkzeug 57 wird hierzu mit seinem Andrückabschnitt 61 im Bereich der Klebestreifen 32 auf die noch applizierte hintere Schutzabdeckung 35 aufgelegt und unter Vornahme eines Anreibevorganges gemäß Pfeil 85 hin und her bewegt.

Das Andrückwerkzeug 57 kann im Bereich des Andrückabschnittes 61 über einen optischen Indikator 86 verfügen, der dem Nutzer visualisiert, wenn eine ausreichend hohe Andrückkraft aufgebracht wird. Es kann sich hier beispielsweise um ein bezüglich eines Gehäuses des Andrückwerkzeuges 57 bewegliches Anzeigeelement handeln. **In** einem darauffolgenden, in Figur 10 illustrierten Verfahrensschritt wird gemäß Pfeil 46 die vordere, zweite Schutzabdeckung 36 nacheinander von allen in der Klebeposition fixierten Selbstklebeeinheiten 5 entfernt, so dass die vorderseitigen Klebeflächen 34 freigelegt sind.

**In** einem sich anschließenden, in Figur 11 illustrierten sechsten Verfahrensschritt werden nacheinander die Befestigungsplatten 6 mit ihrer Rückseite 43 voraus in das ihnen jeweils zugeordnete Positionierfenster 16 eingesetzt. Bei diesem in Figur 11 durch Pfeile illustrierten Einsetzen gelangen die Rückseiten 43 der Befestigungsplatten 6 in Kontakt mit den vorderseitigen Klebeflächen 34 und werden festgeklebt. Bei jeder Befestigungsplatte 6 erfolgt ein gleichzeitiges Festkleben an sämtlichen Klebestreifen 32 der zugeordneten Selbstklebeeinheit 5.

Das Einsetzen der Befestigungsplatten 6 ist aufgrund der aufeinander abgestimmten Umfangskonturen 29 der Positionierfenster 16 und randseitigen Umfangskonturen 41 der Befestigungsplatten 6 nur in einer bestimmten gegenseitigen räumlichen Ausrichtung von Montagerahmen 4 und Befestigungsplatte 6 möglich. Die Ausrichtung basiert auf einem Formschluss zwischen den beiderseitigen Komponenten. Exemplarisch ist dadurch sichergestellt, dass jede montierte Befestigungsplatte 6 so ausgerichtet ist, dass ihre erste Plattenachse 44 parallel zur Rahmenhauptachse 13 verläuft und dementsprechend horizontal ausgerichtet ist. Dies wiederum hat zur Folge, dass die Befestigungsschlitze 65 jeweils mit vertikaler Längserstreckung ausgerichtet sind.

**In** der Figur 12 ist anhand einer in die Einsetzposition verbrachten Befestigungsplatte 6 die auch in der Befestigungsposition eingenommene Relativposition bezüglich des Montagerahmens 4 ersichtlich. Weitere Befestigungsplatten 6 sind in der Figur 12 ebenso wenig dargestellt wie die Selbstklebeeinheiten 5.

Nach dem initialen Festkleben der Befestigungsplatten 6 an den zugeordneten Selbstklebeeinheiten 5 wird auf jede Befestigungsplatte 6 ein erhöhter Druck ausgeübt, um die angestrebte Klebefestigkeit zu erzielen. Letzteres geschieht zweckmäßigerweise im Rahmen eines in Figur 13 illustrierten siebten Verfahrensschrittes unter Anwendung des bereits erwähnten Andrückwerkzeuges 57. Selbiges wird an die Rückseite 43 der betreffenden Befestigungsplatte 6 angesetzt und anschließend bei gleichzeitiger Druckausübung unter Ausführung der Reibebewegung 62 auf der Rückseite 43 hin und her bewegt.

Die Andrückbahnen 63 erlauben ein zielgerichtetes Anwenden des Andrückwerkzeuges 57. Die Breite jeder Andrückbahn 63 und die Breite des Andrückabschnittes 61 sind so aneinander angepasst, dass sich der Andrückabschnitt 61 bei der Reibebewegung 62 jeweils entlang eines der Klebestreifen 32 bewegt. Die nutartige Ausgestaltung der Andrückbahn 63 unterstützt das korrekte Ansetzen und bietet eine Linearführung für die Reibebewegung 62.

Die Selbstklebeeinheiten 5 und Befestigungsplatten 6 sind hinsichtlich ihrer Abmessungen insbesondere so aneinander angepasst, dass die Ziehzunge 38 jedes Klebestreifens 32 der in der Klebeposition befindlichen Selbstklebeeinheit 5 von der die Befestigungsposition einnehmenden Befestigungsplatte 6 nicht abgedeckt ist. Diese Ausgestaltung ist in der Figur 13 veranschaulicht. Auf diese Weise sind die Ziehzungen 38 bei nicht montiertem Objekthalter 7 gut zugänglich, um zwecks Ausführung einer Zugentklebung, also zur Einleitung einer Zugkraft zwecks Aufhebung der Klebeverbindung, ergriffen werden zu können.

An dieser Stelle sei angemerkt, dass das Montageverfahren auch ohne Anwendung eines besonderen Andrückwerkzeuges 57 durchführbar ist, indem man zum Aufbringen der erforderlichen Klebekraft einfach einen anderen geeigneten Gegenstand oder sogar unmittelbar den Finger einer Hand verwendet.

In einem anschließenden, aus Figur 14 ersichtlichen achten Verfahrensschritt wird der Objekthalter 7 in seiner Halteposition montiert. Hierzu wird er exemplarisch gemäß Pfeil 76 von oben her in der Achsrichtung der Rahmennebenachse 15 gleichzeitig auf sämtliche Befestigungsplatten 6 aufgesteckt, wobei die Kopplungseinrichtung 48 mit den einzelnen Befestigungsstrukturen 47 in einen formschlüssigen Eingriff gelangt. Bei entsprechender Ausstattung kann zuvor das Andrückwerkzeug 57 in der Aufnahmevertiefung 64 verstaut werden.

Aus der Figur 15 ist die nach dem Aufstecken des Objekthalters 7 vorliegende Halteposition des Objekthalters 7 ersichtlich. Es ist gut zu erkennen, dass der Objekthalter 7 den Montagerahmen 4 ebenso vollständig verdeckt wie auch die Befestigungsplatten 6 und die Selbstklebeeinheiten 5.

Das Haltesystem 1 befindet sich nun in der nutzungsbereiten Gebrauchskonfiguration. Es kann nun ein in Figur 15 nur gestrichelt angedeutetes Objekt 3 so an dem Objekthalter 7 appliziert werden, dass es von selbigem gehalten ist. Der exemplarisch abgebildete Objekthalter 7 hat im Bereich seines vertikal nach oben weisenden Längsrandes als Haltestruktur 11 eine Einhängevertiefung 11b, in die ein mit einer Hakenstruktur 12 versehenes Objekt lösbar einhängbar ist, so dass es sich im Bereich der Vorderseite 78 des Objekthalters 7 erstreckt.

Alternativ zu dem illustrierten Objekthalter 7 könnte beispielsweise auch ein Objekthalter gemäß Figur 2 an den Befestigungsplatten 6 befestigt werden, um eine als Ablageplatte 11a ausgebildete Haltestruktur 11 zum Ablegen eines Objekts 3 zu nutzen.

Zweckmäßigerweise ist die nutzungsbereite Gebrauchsposition bei Bedarf jederzeit wieder aufhebbar. Mit anderen Worten kann also das Haltesystem 1 bei Bedarf sehr einfach wieder von der Wand 2 abgenommen werden. Dies kann beispielsweise dadurch erfolgen, dass der Objekthalter 7 gemäß dem strichpunktierten Pfeil 87 der Figur 14 von den Befestigungsplatten 6 abgezogen wird und anschließend durch Ziehen an den Ziehzungen 38 der Klebestreifen 32 die durch die Selbstklebeeinheiten 5 hervorgerufenen Klebeverbindungen gelöst werden. Letzteres erlaubt ein leichtes Entfernen der Befestigungsplatten 6 und der Selbstklebeeinheiten 5. Zum Abschluss ist dann nur noch der Montagerahmen 4 von der Wand 2 abzulösen, was dadurch begünstigt ist, dass für die Selbstklebeeinrichtung 23 eine nur geringe Klebekraft gewählt ist, so dass ein rückstandsfreies Lösen möglich ist. Alternativ kann auch die Selbstklebeeinrichtung 23 mittels zugentklebbarer Klebestreifen realisiert sein.

### Bezugszeichen

- 1: Haltesystem
- 2: Wand
- 3: Objekt
- 4: Montagerahmen
- 5: Selbstklebeeinheit
- 6: Befestigungsplatte
- 7: Objekthalter
- 8: Systemachse

- 11: Haltestruktur
- 12: Hakenstruktur
- 13: Rahmenhauptachse
- 14: Rahmenebene
- 15: Rahmennebenachse
- 16: Positionierfenster
- 17: Vorderseite
- 18: Rückseite

- 21: Rahmenstruktur
- 22: Rahmenkörper
- 23: Selbstklebeeinrichtung
- 24: Klebestreifen
- 25: Schutzabdeckung
- 26: Querstege
- 27: Längsstege
- 28: Nivellierungseinrichtung
- 29: Umfangskontur

- 31: Fixierdurchbrechung
- 32: Klebestreifen
- 33: (rückseitige) Klebefläche
- 34: (vorderseitige) Klebefläche
- 35: (erste) Schutzabdeckung
- 36: (zweite) Schutzabdeckung
- 37: Pfeile
- 38: Ziehzunge
- 39: Ziehzungenabschnitt

- 41: (randseitige) Umfangskontur
- 42: Vorderseite
- 43: Rückseite
- 44: (erste) Plattenachse
- 45: (zweite) Plattenachse
- 46: Pfeil
- 47: Befestigungsstruktur
- 48: Kopplungseinrichtung

- 51: Rückseite
- 52: Normalenrichtung
- 53: Abstützvorsprung
- 54: Abstützabschnitt
- 55: Fensterrahmen
- 56: Ausbuchtung
- 57: Andrückwerkzeug
- 58: Griffabschnitt

- 61: Andrückabschnitt
- 62: Reibebewegung
- 63: Andrückbahn
- 64: Aufnahmevertiefung
- 65: Befestigungsschlitz
- 66: Schlitzöffnung
- 67: Verankerungsabschnitt
- 68: Einführöffnung
- 69: Kopplungsvorsprung
- 72: Halterhauptachse
- 73: Halsabschnitt
- 74: Kopfabschnitt
- 75: Objekthalter-Hauptkörper
- 76: Pfeil
- 77: Einführstruktur
- 78: Vorderseite

- 82: (oberer) Längsrand
- 83: (vertikaler) Schenkelabschnitt
- 84: (horizontaler) Schenkelabschnitt
- 85: Pfeil
- 86: Indikator
- 87: Pfeil

- 3a: Kunstgegenstand
- 3b: Aufbewahrungs-/Präsentationsobjekt; Objekt
- 11a: Ablageplatte
- 11b: Einhängevertiefung

zitierte Literatur
zitierte Patentliteratur
(siehe Würdigung des Standes der Technik)
EP 0 861 622 A2
WO 2005/046938 A1

## Patentansprüche

1. Haltesystem zur Montage an einer insbesondere vertikalen Wand (2), mit mindestens einem zum Halten eines Objekts (3) ausgebildeten Objekthalter (7), der mittels einer doppelseitig klebenden Selbstklebeeinheit (5) an der Wand (2) festklebbar ist,
**gekennzeichnet durch**
- einen eine Vorderseite (17) und eine Rückseite (18) aufweisenden Montagerahmen (4), der von mindestens einem zu der Vorderseite (17) und zu der Rückseite (18) offenen Positionierfenster (16) durchsetzt ist und der rückseitig eine Selbstklebeeinrichtung (23) aufweist, mit der er in einer Wandposition an einer Wand (2) festklebbar ist,
- mindestens eine doppelseitig klebende Selbstklebeeinheit (5), die eine rückseitige Klebefläche (33) aufweist und die ausgebildet ist, um durch das mindestens eine Positionierfenster (16) des die Wandposition einnehmenden Montagerahmens (4) hindurch unter Einnahme einer Klebeposition mit seiner rückseitigen Klebefläche (33) an die Wand (2) angeklebt zu werden,
- und mindestens eine eine Vorderseite (42) und eine Rückseite (43) aufweisende Befestigungsplatte (6), die mit einer durch bezüglich des Montagerahmens (4) erfolgenden Formschluss vorgegebenen Ausrichtung in ein Positionierfenster (16) des Montagerahmens (4) einsetzbar und unter Einnahme einer sich dadurch ergebenden Befestigungsposition mit ihrer Rückseite (43) an die vorderseitige Klebefläche (34) der in dem Positionierfenster (16) in der Klebeposition befindlichen Selbstklebeeinheit (5) anklebbar ist und die an ihrer Vorderseite (42) eine zur Befestigung des Objekthalters (7) ausgebildete Befestigungsstruktur (47) aufweist,
- wobei der Objekthalter (7) an seiner Rückseite (51) eine an die Befestigungsstruktur (47) der mindestens einen Befestigungsplatte (6) angepasste Kopplungseinrichtung (48) aufweist und unter zumindest partieller vorderseitiger Abdeckung des Montagerahmens (4) mit seiner Kopplungseinrichtung (48) in einer Halteposition an der Befestigungsstruktur (47) der mindestens einen in der Befestigungsposition befindlichen Befestigungsplatte (6) befestigbar ist.

2. Haltesystem nach Anspruch 1, **dadurch gekennzeichnet, dass** der Montagerahmen (4) eine zur Ausrichtung der Wandposition des Montagerahmens (4) nutzbare, von der Vorderseite (17) des Montagerahmens (4) her sichtbare Nivellierungseinrichtung (28) aufweist, bei der es sich zweckmäßigerweise um eine Libelle handelt.

3. Haltesystem nach Anspruch 1 oder 2, **dadurch gekennzeichnet, dass** die Selbstklebeeinrichtung (23) des Montagerahmens (4) aus wenigstens zwei jeweils mit einer vor dem Ankleben an die Wand (2) abziehbaren flexiblen Schutzabdeckungen (25) versehenen Klebestreifen (24) besteht, die in der Achsrichtung einer imaginären Rahmenhauptachse (13) beabstandet zueinander mit zu der Rahmenhauptachse (13) orthogonaler Längsausrichtung rückseitig am Montagerahmen (4) angeordnet sind, wobei die Rahmenhauptachse (13) des Montagerahmens (4) in der Wandposition zweckmäßigerweise horizontal ausgerichtet ist.

4. Haltesystem nach einem der Ansprüche 1 bis 3, **dadurch gekennzeichnet, dass** die mindestens eine doppelseitig klebende Selbstklebeeinheit (5) mindestens einen eine Längserstreckung aufweisenden, doppelseitig selbstklebenden Klebestreifen (32) aufweist.

5. Haltesystem nach Anspruch 4, **dadurch gekennzeichnet, dass** jeder doppelseitig selbstklebende Klebestreifen (32) der mindestens einen doppelseitig klebenden Selbstklebeeinheit (5) ein durch Zug entklebbarer Klebestreifen (32) ist, der einen Endabschnitt aufweist, der als eine zum Ziehen mit Fingern einer Hand ergreifbare Ziehzunge (38) ausgebildet ist,
wobei vorzugsweise die Ziehzunge (38) jedes Klebestreifens (32) der mindestens einen die Klebeposition einnehmenden Selbstklebeeinheit (5) von der in der Befestigungsposition an der vorderseitigen Klebefläche (34) der Selbstklebeeinheit (5) festgeklebten Befestigungsplatte (6) nicht abgedeckt ist, so dass zumindest bei nicht montiertem Objekthalter (7) ein Ergreifen der Ziehzunge (38) zwecks Ausführung einer Zugentklebung möglich ist..

6. Haltesystem nach einem der Ansprüche 4 und 5, **dadurch gekennzeichnet, dass** die mindestens eine doppelseitig klebende Selbstklebeeinheit (5) mehrere mit zueinander paralleler Längserstreckung nebeneinander angeordnete, doppelseitig selbstklebende Klebestreifen (32) aufweist, die jeweils gemeinsam die rückseitige Klebefläche (33) und die vorderseitige Klebefläche (34) der Selbstklebeeinheit (5) bilden und die zwischen zwei sich jeweils über sämtliche Klebestreifen (32) der Selbstklebeeinheit (5) hinweg erstreckenden abziehbaren flexiblen ersten und zweiten Schutzabdeckungen (35, 36) angeordnet sind, wobei die erste Schutzabdeckung (35) abziehbar ist, damit die Selbstklebeeinheit (5) unter gleichzeitiger Nutzung sämtlichen Klebestreifen (32) der Selbstklebeeinheit (5) mit der rückseitigen Klebefläche (33) in der Klebeposition an einer Wand (2) festklebbar ist, wobei vorzugsweise die zweite Schutzabdeckung (36) bei die Klebeposition einnehmender Selbstklebeeinheit (5) abziehbar ist, um die vorderseitige Klebefläche (34) nutzbar zu machen, so dass eine Befestigungsplatte (6) zur Einnahme ihrer Befestigungsposition an der von sämtlichen Klebestreifen (32) gemeinsam definierten vorderseitigen Klebefläche (34) der in der Klebeposition befindlichen Selbstklebeeinheit (5) festklebbar ist.

7. Haltesystem nach einem der Ansprüche 4 bis 6, **dadurch gekennzeichnet, dass** die mindestens eine Befestigungsplatte (6) an ihrer Vorderseite (42) in jedem in der Befestigungsposition einen der Klebestreifen (32) überdeckenden Bereich eine sich entlang des überdeckten Klebestreifens (32) erstreckende und zweckmäßigerweise durch eine längsnutartige Vertiefung definierte Andrückbahn (63) zum Ansetzen und Entlangreiben eines manuell handhabbares Andrückwerkzeuges (57) aufweist.

8. Haltesystem nach einem der Ansprüche 1 bis 7, **dadurch gekennzeichnet, dass** es über ein manuell handhabbares Andrückwerkzeug (57) verfügt, wobei rückseitig am Objekthalter (7) zweckmäßigerweise eine Aufnahmevertiefung (64) zur lösbaren Unterbringung des Andrückwerkzeuges (57) bei Nichtgebrauch ausgebildet ist und/oder zur Erzielung der in der Befestigungsposition vorliegenden formschlüssigen Ausrichtung jeder Befestigungsplatte (6) die durch den Montagerahmen (4) definierte Umfangskontur (29) des mindestens einen Positionierfensters (16) und die randseitige Umfangskontur (41) der mindestens einen Befestigungsplatte (6) unkreisförmig und komplementär zueinander gestaltet sind, wobei vorzugsweise die Umfangskontur (29) des mindestens einen Positionierfensters (16) und die randseitige Umfangskontur (41) der mindestens einen Befestigungsplatte (6) derart aufeinander abgestimmt konturiert sind, dass die Befestigungsplatte (6) zur Anbringung in ihrer Befestigungsposition nur in einer einzigen bezüglich des Montagerahmens (4) eingenommenen Relativposition in das mindestens eine Positionierfenster (16) einsetzbar ist.

9. Haltesystem nach einem der Ansprüche 1 bis 8, **dadurch gekennzeichnet, dass** die mindestens eine Befestigungsplatte (6) randseitig mindestens einen seitlich vorstehenden Abstützvorsprung (53) aufweist, mit dem sie in ihrer Befestigungsposition den Montagerahmen (4) im Bereich dessen Rückseite (18) partiell überlappt und mit dem sie rückseitig an einem Abstützabschnitt (54) des Montagerahmens (4) abstützbar oder abgestützt ist.

10. Haltesystem nach einem der Ansprüche 1 bis 9, **dadurch gekennzeichnet, dass** die Befestigungsstruktur (47) der mindestens einen Befestigungsplatte (6) über mindestens einen eine hinterschnittene Querschnittskontur aufweisenden Befestigungsschlitz (65) verfügt, der sich in der Befestigungsposition der Befestigungsplatte (6) zweckmäßigerweise vertikal erstreckt und in den der Objekthalter (7) bei seiner Montage mit einem Kopplungsvorsprung (69) seiner Kopplungseinrichtung (48) formschlüssig einschiebbar ist, wobei der Montagerahmen (4) zweckmäßigerweise im Umfangsbereich jedes Positionierfensters (16) in Verlängerung jedes Befestigungsschlitzes (65) der mindestens einen in der Befestigungsposition befindlichen Befestigungsplatte (6) eine zum Einführen eines Kopplungsvorsprunges (69) nutzbare trichterartige Einführstruktur (77) aufweist.

11. Haltesystem nach einem der Ansprüche 1 bis 10, **dadurch gekennzeichnet, dass** der Montagerahmen (4) mehrere entlang einer imaginären Rahmenhauptachse (13) in einer Reihe mit Abstand zueinander angeordnete Positionierfenster (16) aufweist, denen jeweils eine von mehreren Selbstklebeeinheiten (5) und eine von mehreren Befestigungsplatten (16) zugeordnet ist, wobei der die Halteposition einnehmende Objekthalter (7) mit seiner Kopplungseinrichtung (48) an den Befestigungsstrukturen (47) sämtlicher Befestigungsplatten (6) befestigt ist.

12. Haltesystem nach einem der Ansprüche 1 bis 11, **dadurch gekennzeichnet, dass** der Objekthalter (7) mindestens eine zum Halten eines Objekts (3) vorgesehene Haltestruktur (11) aufweist, bei der es sich zweckmäßigerweise um eine das Einhängen eines zu haltenden Objekts (3) ermöglichende, insbesondere rinnenförmig ausgebildete Einhängevertiefung (11b) oder um eine das lose Ablegen eines zu haltenden Objekts (3) ermöglichende Ablageplatte (11a) handelt,
wobei vorzugsweise das Haltesystem mindestens ein zur Fixierung durch die Haltestruktur (11) vorgesehenes zu haltendes Objekt (3) aufweist.

13. Haltesystem nach einem der Ansprüche 1 bis 12, **dadurch gekennzeichnet, dass** es eine nutzungsbereite Gebrauchskonfiguration aufweist, in der der Montagerahmen (4) die Wandposition, die mindestens eine doppelseitig klebende Selbstklebeeinheit (5) die Klebeposition, die mindestens eine Befestigungsplatte (6) die Befestigungsposition und der Objekthalter (7) die Halteposition einnimmt.

14. Verfahren zur Montage eines Haltesystems (1) nach einem der Ansprüche 1 bis 13 an einer insbesondere vertikalen Wand (2),
**gekennzeichnet durch** folgende Verfahrensschritte:
- Festkleben des Montagerahmens (4) mittels dessen rückseitiger Selbstklebeeinrichtung (23) in der gewünschten Wandposition an der Wand (2),
- anschließendes Ankleben der mindestens einen doppelseitig klebenden Selbstklebeeinheit (5) mit ihrer rückseitigen Klebefläche (33) in ihrer Klebeposition an der Wand (2) durch das mindestens eine Positionierfenster (16) des zuvor in der Wandposition festgeklebten Montagerahmens (4) hindurch,
- daran anschließendes formschlüssiges Einsetzen der mindestens einen Befestigungsplatte (6) in ein Positionierfenster (16) des in der Wandposition festgeklebten Montagerahmens (4), verbunden mit einem Ankleben der auf diese Weise bezüglich des Montagerahmens (4) ausgerichteten Befestigungsplatte (6) an die vorderseitige Klebefläche (34) der in dem Positionierfenster (16) in der Klebeposition befindlichen Selbstklebeeinheit (5) zum Erhalt der Befestigungsposition, und
- anschließendes Befestigen des Objekthalters (7) in der Halteposition an der Befestigungsstruktur (47) der mindestens einen eine Befestigungsposition einnehmenden Befestigungsplatte (6) mittels der Kopplungseinrichtung (48), wobei der Montagerahmen (4) an seiner Vorderseite (17) durch den Objekthalter (7) zumindest partiell abgedeckt wird,
wobei vorzugsweise der Montagerahmen (4) bei seiner Fixierung in der Wandposition mittels einer in ihn integrierten Nivellierungseinrichtung (28) horizontal ausgerichtet wird.

15. Verfahren nach Anspruch 14, **dadurch gekennzeichnet,**
- **dass** ein Montagerahmen (4) verwendet wird, der mehrere entlang einer imaginären Rahmenhauptachse (13) mit Abstand zueinander aufeinanderfolgend angeordnete Positionierfenster (16) aufweist,
- wobei nach dem Festkleben des Montagerahmens (4) in der Wandposition durch jedes Positionierfenster (16) hindurch jeweils eine von mehreren doppelseitig klebenden Selbstklebeeinheiten (5) in ihrer Klebeposition an der Wand (2) festgeklebt wird,
- worauf in jedes der Positionierfenster (16) unter bezüglich des Montagerahmens (4) formschlüssiger Ausrichtung jeweils eine von mehreren Befestigungsplatten (6) eingesetzt und zum Fixieren der Befestigungsposition an der im zugeordneten Positionierfenster (16) befindlichen Selbstklebeeinheit (5) festgeklebt wird,
- worauf der Objekthalter (7) mit seiner Kopplungseinrichtung (48) an den Befestigungsstrukturen sämtlicher Befestigungsplatten (6) befestigt wird, um seine Halteposition einzunehmen.

## Claims

1. A holding system for fitting to a vertical wall (2) in particular, with at least one object holder (7) formed to hold an object (3) and which can be stuck to the wall (2) by means of a double-sided self-adhesive unit (5),
**characterized by**
- a mounting frame (4) having a front side (17) and a rear side (18), through which at least one positioning window (16) which is open to the front side (17) and to the rear side (18) extends and which has a self-adhesive device (23) on the rear side thereof, with which it can be stuck to a wall (2) in a wall position,
- at least one double-sided self-adhesive unit (5), which has a rear side adhesive surface (33) and which is formed to occupy an adhesion position, adhered to the wall (2) with its rear side adhesive surface (33), through the at least one positioning window (16) of the mounting frame (4) occupying the wall position,
- and at least one fastening plate (6) having a front side (42) and a rear side (43), which can be inserted into a positioning window (16) of the mounting frame (4) with an orientation which is specified by a form-fit being made with respect to the mounting frame (4), and which can be adhered with its rear side (43) on the front side adhesive surface (34) of the self-adhesive unit (5) located in the positioning window (16) in the adhesion position, occupying a fastening position thereby, and which has a fastening structure (47) formed on its front side (42) for fastening the object holder (7),
- wherein on its rear side (51), the object holder (7) has a coupling device (48) which is adapted to the fastening structure (47) of the at least one fastening plate (6) and which can be fastened with its coupling device (48) to the fastening structure (47) of the at least one fastening plate (6) located in the fastening position in a holding position while at least partially covering the front side of the mounting frame (4).

2. The holding system as claimed in claim 1, **characterized in that** the mounting frame (4) has a levelling device (28), which is advantageously a spirit level, which is visible from the front side (17) of the mounting frame (4) and which can be used in order to orientate the wall position of the mounting frame (4),

3. The holding system as claimed in claim 1 or claim 2, **characterized in that** the self-adhesive device (23) of the mounting frame (4) consists of at least two adhesive strips (24) respectively provided with flexible protective coverings (25) which can be removed before adhesion to the wall (2), which are disposed on the mounting frame (4) separated from each other in the axial direction of an imaginary main frame axis (13) with a longitudinal extent which is orthogonal to the main frame axis (13), wherein in the wall position, the main frame axis (13) of the mounting frame (4) is advantageously orientated horizontally.

4. The holding system as claimed in one of claims 1 to 3, **characterized in that** the at least one double-sided self-adhesive unit (5) has at least one double-sided self-adhesive adhesive strip (32) which has a longitudinal extent.

5. The holding system as claimed in claim 4, **characterized in that** each double-sided self-adhesive adhesive strip (32) of the at least one double-sided self-adhesive unit (5) is a stretch-releasable adhesive strip (32) which has an end section which is formed as a pull tab (38) which can be gripped with the fingers of a hand for pulling,
wherein preferably, the pull tab (38) of each adhesive strip (32) of the at least one self-adhesive unit (5) occupying the adhesion position is not covered by the fastening plate (6) stuck to the front side adhesive surface (34) of the self-adhesive unit (5) in the fastening position, so that gripping of the pull tab (38) is possible for the purposes of carrying out a stretch release procedure at least when the object holder (7) is not mounted.

6. The holding system as claimed in one of claims 4 and 5, **characterized in that** the at least one double-sided self-adhesive unit (5) has a plurality of double-sided self-adhesive adhesive strips (32) which are disposed next to each other with their longitudinal extents parallel with respect to each other and which respectively together form the rear side adhesive surface (33) and the front side adhesive surface (34) of the self-adhesive unit (5) and which are disposed between two removable flexible first and second protective coverings (35, 36) which respectively cover all of the adhesive strips (32) of the self-adhesive unit (5), wherein the first protective covering (35) is removable so that the self-adhesive unit (5) can be stuck with the rear side adhesive surface (33) in the adhesion position to a wall (2) using all of the adhesive strips (32) of the self-adhesive unit (5) simultaneously, wherein preferably, in the self-adhesive unit (5) occupying the adhesion position, the second protective covering (36) is removable in order to make the front side adhesive surface (34) usable, so that a fastening plate (6) can be stuck in order to occupy its fastening position on the front side adhesive surface (34), defined by all of the adhesive strips (32) together, of the self-adhesive unit (5) located in the adhesion position.

7. The holding system as claimed in one of claims 4 to 6, **characterized in that** at its front side (42) in each region covering over one of the adhesive strips (32) in the fastening position, the at least one fastening plate (6) has a pressing track (63) extending along the covered adhesive strip (32) and advantageously defined by a longitudinal groove-like indentation for applying and rubbing a manually manipulatable pressing tool (57) along it.

8. The holding system as claimed in one of claims 1 to 7, **characterized in that** it has a manually manipulatable pressing tool (57), wherein advantageously, a retaining indentation (64) is formed on the rear side of the object holder (7) for the detachable accommodation of the pressing tool (57) when it is not in use, and/or in order to obtain the form-fitting orientation of each fastening plate (6) present in the fastening position, the perimeter (29) of the at least one positioning window (16) defined by the mounting frame (4) and the marginal perimeter (41) of the at least one fastening plate (6) are non-circular and complementary with respect to each other, wherein preferably, the contours of the perimeter (29) of the at least one positioning window (16) and the marginal perimeter (41) of the at least one fastening plate (6) are matched in a manner such that, in order to bring it into its fastening position, the fastening plate (6) can only be inserted into the at least one positioning window (16) in a single relative position with respect to the mounting frame (4).

9. The holding system as claimed in one of claims 1 to 8, **characterized in that** the margin of the at least one fastening plate (6) has at least one laterally protruding support protrusion (53), with which in its fastening position, it partially overlaps the mounting frame (4) in the region of the rear side (18) thereof and with which it can be or is supported on the rear side on a support section (54) of the mounting frame (4).

10. The holding system as claimed in one of claims 1 to 9, **characterized in that** the fastening structure (47) of the at least one fastening plate (6) is provided with at least one fastening slot (65) which has an undercut cross sectional contour, which advantageously extends vertically in the fastening position of the fastening plate (6) and into which the object holder (7) with a coupling protrusion (69) of its coupling device (48) can be inserted in a form-fitting manner when it is being fitted, wherein advantageously, in the peripheral region of each positioning window (16) in the extension of each fastening slot (65) of the at least one fastening plate (6) located in the fastening position, the mounting frame (4) has a funnel-like introduction structure (77) which can be used to introduce a coupling protrusion (69).

11. The holding system as claimed in one of claims 1 to 10, **characterized in that** the mounting frame (4) has a plurality of positioning windows (16) disposed along an imaginary main frame axis (13) in a row separated from each other, with which a respective one of a plurality of self-adhesive units (5) and one of a plurality of fastening plates (16) is associated, wherein the object holder (7) occupying the holding position is fastened with its coupling device (48) to the fastening structures (47) of all of the fastening plates (6).

12. The holding system as claimed in one of claims 1 to 11, **characterized in that** the object holder (7) has at least one holding structure (11) provided for holding an object (3), which is advantageously a suspension indentation (11b), in particular a channel-shaped suspension indentation, enabling an object (3) to be held to be suspended, or it is a shelf (11a) enabling an object (3) to be held to be put down loosely,
wherein preferably, the holding system has at least one object (3) to be held for fixing by means of the holding structure (11).

13. The holding system as claimed in one of claims 1 to 12, **characterized in that** it is in a configuration which is ready for use, in which the mounting frame (4) occupies the wall position, the at least one double-sided adhesive self-adhesive unit (5) occupies the adhesion position, the at least one fastening plate (6) occupies the fastening position and the object holder (7) occupies the holding position.

14. A method for mounting a holding system (1) as claimed in one of claims 1 to 13 on a vertical wall (2) in particular,
**characterized by** the following method steps:
- sticking the mounting frame (4) in the desired wall position on the wall (2) by means of its rear side self-adhesive device (23),
- subsequently, adhering the at least one double-sided self-adhesive unit (5) with its rear side adhesive surface (33) in its adhesion position to the wall (2) through the at least one positioning window (16) of the mounting frame (4) which has previously been stuck in the wall position,
- subsequently thereto, form-fitting insertion of the at least one fastening plate (6) into a positioning window (16) of the mounting frame (4) stuck in the wall position, associated with an adhesion of the fastening plate (6) which has been orientated in this manner with respect to the mounting frame (4) to the front side adhesive surface (34) of the self-adhesive unit (5) located in the positioning window (16) in the adhesion position in order to attain the fastening position, and
- subsequently, fastening the object holder (7) in the holding position on the fastening structure (47) of the at least one fastening plate (6) occupying a fastening position by means of the coupling device (48), wherein the front side (17) of the mounting frame (4) is at least partially covered by the object holder (7),
wherein preferably, when fixing it in the wall position, the mounting frame (4) is orientated horizontally by means of a levelling device (28) integrated into it.

15. The method as claimed in claim 14, **characterized in that**
- a mounting frame (4) is used which has a plurality of positioning windows (16) disposed consecutively along an imaginary main frame axis (13) separated from each other,
- wherein, after sticking the mounting frame (4) in the wall position, a respective one of a plurality of double-sided self-adhesive units (5) is stuck to the wall (2) in its adhesion position through each positioning window (16),
- whereupon, in each of the positioning windows (16), a respective one of a plurality of fastening plates (6) is inserted in a form-fitting orientation with respect to the mounting frame (4) and is stuck on the self-adhesive unit (5) located in the associated positioning window (16) in order to fix the fastening position,
- whereupon the object holder (7) with its coupling device (48) is fastened to the fastening structures of all of the fastening plates (6) in order to occupy its holding position.

## Revendications

1. Système de support destiné au montage sur un mur (2) notamment de nature verticale, comportant au moins un support d'objet (7) qui est réalisé de manière à pouvoir maintenir un objet (3) et qui peut être collé sur le mur (2) au moyen d'une unité autocollante double face (5),
**caractérisé par**
- un cadre de montage (4) comportant une face avant (17) et une face arrière (18), lequel est traversé par au moins une fenêtre de positionnement (16) s'ouvrant vers la face avant (17) et la face arrière (18) et lequel est pourvu, sur sa face arrière, d'un dispositif autocollant (23) permettant de le coller, dans une position murale, sur un mur (2),
- au moins une unité autocollante double face (5) qui comporte une face collante arrière (33) et qui est réalisée de manière à pouvoir être collé, à travers l'au moins une fenêtre de positionnement (16) du cadre de montage (4) adoptant sa position murale, sur le mur (2) par sa face collante arrière (33) en adoptant une position de collage,
- et au moins une plaque de fixation (6) qui comporte une face avant (42) et une face arrière (43) et qui peut être insérée dans une fenêtre de positionnement (16) du cadre de montage (4) selon une orientation prédéfinie par la complémentarité de forme qu'elle présente avec le cadre de montage (4), pour ainsi adopter sa position de fixation et pouvoir être collée par sa face arrière (43) sur la face collante avant (34) de l'unité autocollante (5) adoptant sa position de collage au sein de la fenêtre de positionnement (16), et qui présente sur sa face avant (42) une structure de fixation (47) réalisée de manière à permettre de fixer le support d'objet (7)
- le support d'objet (7) comportant sur sa face arrière (51) un dispositif de couplage (48) qui est adapté à la structure de fixation (47) de l'au moins une plaque de fixation (6), et pouvant être fixé, en recouvrant au moins partiellement la face avant du cadre de montage (4) et en adoptant une position de support, par son dispositif de couplage (48) sur la structure de fixation (47) de l'au moins une plaque de fixation (6) adoptant sa position de fixation.

2. Système de support selon la revendication 1, **caractérisé en ce que** le cadre de montage (4) comporte un dispositif de nivellement (28) qui peut être utilisé pour orienter la position murale du cadre de montage (4) et qui est visible depuis la face avant (17) du cadre de montage (4), s'agissant d'une manière appropriée d'un niveau à bulle.

3. Système de support selon les revendications 1 ou 2, **caractérisé en ce que** le dispositif auto-collant (23) du cadre de montage (4) est constitué d'au moins deux ruban adhésifs (24) dont chacun est pourvu d'une couche de protection (25) flexible pouvant être retirée avant le collage au mur (2) et lesquels sont disposés, l'un espacé de l'autre, sur la face arrière du cadre de montage (4) selon la direction axiale d'un axe de cadre principal imaginaire (13) en ayant une étendue longitudinale perpendiculaire à l'axe de cadre principal (13), l'axe de cadre principal (13) du cadre de montage (4) ayant, en position murale, de manière appropriée une orientation horizontale.

4. Système de support selon l'une des revendications 1 à 3, **caractérisé en ce que** l'au moins une unité autocollante double face (5) comporte au moins un ruban adhésif autocollant double face (32) ayant une étendue longitudinale.

5. Système de support selon la revendication 4, **caractérisé en ce que** chacun des rubans adhésifs autocollants double face (32) de l'au moins une unité autocollante double face (5) est ruban adhésif (32) pouvant être décollé en tirant et comportant une partie terminale réalisée sous forme d'une languette de tirage (38) susceptible d'être saisie par les doigts d'une main pour la tirer,
la languette de tirage (38) de chacun des ruban adhésifs (32) de l'au moins une unité autocollante (5) adoptant sa position de collage n'étant préférentiellement pas recouverte par plaque de fixation (6) laquelle est collée, dans la position de fixation, sur la face collante avant (34) de l'unité autocollante (5), faisant en sorte que l'on puisse saisir la languette de tirage (38) afin d'effectuer le décollage en tirant, au moins lorsque le support d'objet (7) n'est pas monté.

6. Système de support selon l'une des revendications 4 et 5, **caractérisé en ce que** l'au moins une unité autocollante (5) double face comporte plusieurs rubans adhésifs autocollants double face (32) qui sont juxtaposés de manière à ce que leurs étendues longitudinales soient parallèles les unes aux autres et dont l'ensemble forme chacune de la face collante arrière (33) et de la face collante avant (34) de l'unité autocollante (5) et qui sont disposés en entre deux couches de protection (35, 36) flexibles, à savoir la première et la seconde, dont chacune s'étend à travers l'ensemble des rubans adhésifs (32) de l'unité autocollante (5), la première couche de protection (35) pouvant être retirée afin de pouvoir coller l'unité autocollante (5) par la face collante arrière (33) dans la position de collage sur un mur (2) en utilisant simultanément l'ensemble des rubans adhésifs (32) de l'unité autocollante (5), la seconde couche de protection (36) pouvant préférentiellement être retirée lorsque l'unité autocollante (5) adopte sa position de collage, pour rendre utilisable la face collante avant (34) et faire en sorte qu'une plaque de fixation (6) puisse être collée sur la face collante avant (34), définie par l'ensemble des rubans adhésifs (32), de l'unité autocollante (5) se trouvant en position de collage, et ainsi adopter sa position de fixation.

7. Système de support selon l'une des revendications 4 à 6, **caractérisé en ce que** l'au moins une plaque de fixation (6) comporte sur sa face avant (42), au sein de chaque zone recouvrant un ruban adhésif (32) dans la position de fixation, une bande d'appui (63) qui s'étend le long du ruban adhésif (32) recouvert tout en étant définie de manière appropriée par une cavité ressemblant à une rainure longitudinale et qui permet d'y poser un outil d'appui (57) à utilisation manuelle que l'on déplace selon un sens longitudinal en créant de la friction.

8. Système de support selon l'une des revendications 1 à 7, **caractérisé en ce qu'**il est pourvu d'un outil d'appui (57) à utilisation manuelle, un évidement de réception (64) destiné au logement libérable de l'outil d'appui (57) en cas de non-utilisation étant préférentiellement formé sur la face arrière du support d'objet (7) et/ou le contour circonférentiel (29), défini par le cadre de montage (4), de l'au moins une fenêtre de positionnement (16) et le contour circonférentiel (41) périphérique de l'au moins une plaque de fixation (6) étant de forme non-circulaire et réalisés de manière à être complémentaires l'un à l'autre afin de pouvoir réaliser l'orientation par complémentarité de forme de chaque plaque de fixation (6) adoptant sa position de fixation, le contour circonférentiel (29) de l'au moins une fenêtre de positionnement (16) et le contour circonférentiel (41) périphérique de l'au moins une plaque de fixation (6) ayant de préférence des contours alignés l'un sur l'autre de manière à ce que la plaque de fixation (6) ne puisse être insérée, afin de la monter dans sa position de fixation, dans l'au moins une fenêtre de positionnement (16) que dans une seule position qu'elle adopte par rapport au cadre de montage (4).

9. Système de support selon l'une des revendications 1 bis 8, **caractérisé en ce que** l'au moins une plaque de fixation (6) présente en périphérie au moins un nez d'appui (53) faisant saillie latéralement et avec lequel elle engage, dans sa position de fixation, un chevauchement partiel avec le cadre de montage (4) au niveau de la face arrière (18) de ce dernier et avec lequel elle prend appui ou peut prendre appui, par sa face arrière, sur une section d'appui (54) du cadre de montage (4).

10. Système de support selon l'une des revendications 1 à 9, **caractérisé en ce que** la structure de fixation (47) de l'au moins une plaque de fixation (6) est pourvue d'au moins une fente de fixation (65) laquelle a un contour transversal en contre-dépouille tout en s'étendant de manière appropriée verticalement lorsque la plaque de fixation (6) adopte sa position de fixation, et dans laquelle le support d'objet (7) peut être inséré par complémentarité de forme lors de son montage au moyen d'une saillie de couplage (69) de son dispositif de couplage (48), le cadre de montage (4) comportant de manière appropriée au niveau de la circonférence de chaque fenêtre de positionnement (16), dans le prolongement de chaque fente de fixation (65) de l'au moins une plaque de fixation (6) adoptant sa position de fixation, une structure d'insertion (77) de type entonnoir pouvant être utilisée pour insérer la saillie de couplage (69).

11. Système de support selon l'une des revendications 1 à 10, **caractérisé en ce que** le cadre de montage (4) comporte une pluralité de fenêtres de positionnement (16) lesquelles sont disposées en série, espacées les unes des autres, le long d'un axe principal de cadre (13) imaginaire, l'une parmi une pluralité d'unités autocollantes (5) et l'une parmi une pluralité de plaques de fixation (16) étant associées à chacune de ces dernières, le support d'objet (7) étant fixé, lorsqu'il adopte sa position de support, par son dispositif de couplage (48) aux structures de fixation (47) de l'ensemble des plaques de fixation (6).

12. Système de support selon l'une des revendications 1 à 11, **caractérisé en ce que** le support d'objet (7) comporte au moins une structure de support (11) laquelle est destinée à tenir un objet (3) et laquelle correspond de manière appropriée à une cavité d'accrochage (11b), réalisée notamment sous forme d'une rigole, permettant d'y accrocher un objet (3) devant être tenu ou bien à une plaque de soutien (11) permettant d'y poser de manière amovible un objet (3) devant être tenu,
le système de support comportant préférentiellement au moins un objet (3) devant être tenu, ce dernier étant prévu pour être fixé par la structure de support (11).

13. Système de support selon l'une des revendications 1 à 12, **caractérisé en ce qu'**il présente une configuration d'utilisation opérationnelle dans laquelle le cadre de montage (4) adopte la position murale, l'au moins une unité autocollante double face (5) la position de collage, l'au moins une plaque de fixation (6) la position de fixation, et le support d'objet (7) la position de support.

14. Procédé de montage d'un système de support (1) selon l'une des revendications 1 à 13 sur un mur (2), notamment de nature verticale,
**caractérisé par** les étapes de procédé suivantes :
- collage du cadre de montage (4) au moyen de son dispositif autocollant arrière (23) dans la position murale souhaitée sur le mur (2),
- ensuite, le collage de l'au moins une unité autocollante double face (5) par sa face collante arrière (33) dans sa position de collage sur le mur (2), à travers l'au moins une fenêtre de positionnement (16) du cadre de cadre (4) précédemment collé dans la position murale,
- ensuite, insertion par complémentarité de forme de l'au moins une plaque de fixation (6) dans une fenêtre de positionnement (16) du cadre de montage (4) collé dans la position murale, en association avec le collage de la plaque de fixation (6), laquelle se trouve ainsi orientée par rapport au cadre de montage (4), sur la face collante avant (34) de l'unité autocollante (5) adoptant sa position de collage au sein de la fenêtre de positionnement (16), afin de maintenir la position de fixation, et
- ensuite, fixation du support d'objet (7) dans la position de support sur la structure de fixation (47) de l'au moins une plaque de fixation (6), laquelle adopte une position de fixation, au moyen du dispositif de couplage (48), le cadre de montage (4) étant sur sa face avant (17) au moins partiellement recouvert par le support d'objet (7),
le cadre de montage (4) étant de préférence orienté horizontalement lors de la fixation dans la position murale au moyen d'un dispositif de nivellement (28) qu'il incorpore.

15. Procédé selon la revendication 14, **caractérisé en ce que**
- l'on utilise un cadre de montage (4) comportant une pluralité de fenêtres de positionnement (16) disposées en série, espacées les unes des autres, le long d'un axe de cadre principal (13),
- suite au collage du cadre de montage (4) dans la position murale à travers chacune des fenêtres de positionnement (16), on colle, à chaque instance, une parmi la pluralité d'unités autocollantes double face (5) dans sa position de collage sur le mur (2),
- ensuite on insère, à chaque instance, une parmi la pluralité de plaques de fixation (6) selon une orientation de complémentarité de forme par rapport au cadre de montage (4) dans chacune des fenêtres de positionnement (16), et on la colle sur l'unité autocollante (5) située dans la fenêtre de positionnement (16) associée, pour ainsi la position de fixation,
- ensuite, on fixe le support d'objet (7) par son dispositif de couplage (48) aux structures de fixation de l'ensemble des plaques de fixation (6) afin qu'il adopte sa position de support.
